# EUROPÄISCHE PATENTANMELDUNG

(11) **EP 2 703 074 A1**
(43) Veröffentlichungstag der Anmeldung: **05.03.2014**
(21) Anmeldenummer: 12182963.4
(22) Anmeldetag: 04.09.2012
(51) Int. Cl.: B01F 17/00, C08G 12/32, C08J 9/00, C08J 9/36, C11D 1/83, C11D 1/831

(54) **Verfahren zur Herstellung von Melamin/Formaldehyd-Schaumstoffen**

(71) Anmelder: BASF SE, 67056 Ludwigshafen (DE)
(72) Erfinder: Die Erfindernennung liegt noch nicht vor

(57) **Zusammenfassung**

Die Erfindung betrifft Verfahren zur Herstellung von Melamin/Formaldehyd-Schaumstoffen, umfassend die Verfahrensschritte:
a) Herstellen einer wäßrigen Mischung M1) umfassend
100 Gewichtsteile mindestens eines Melamin/Formaldehyd-Vorkondensats,
2 bis 4 Gewichtsteile mindestens eines Härters,
0,2 bis 5 Gewichtsteile einer Tensidmischung,
0,1 bis 5 Gewichtsteile mindestens eines Salzes einer anorganischen Säure oder einer organischen Carbonsäure,
1 bis 40 Gewichtsteile mindestens eines Treibmittels,
0 bis 5 Gewichtsteile mindestens eines Farbstoffs und/oder eines optischen Aufhellers,
0 bis 20 Gewichtsteile eines oder mehrerer weiterer Additive, und
25 bis 60 Gewichtsteile Wasser,

b) Erwärmen und Aufschäumen der Mischung M1) mittels Mikrowellenstrahlung,
c) Vernetzung und Härten des gebildeten Schaums mit Hilfe des Härters und Mikrowellenstrahlung,
d) Trocknung des Schaumstoffs mittels Mikrowellenstrahlung und
e) Tempern des getrockneten Schaumstoffs mittels Heißluft,
wobei erfindungswesentlich ist, dass die Mischung M1) als Tensidmischung ein Gemisch aus 50 bis 90 Gew.-% eines anionischen Tensids und 10 bis 50 Gew.-% eines nichtionischen Tensids enthält, wobei die Gewichtsprozente jeweils bezogen sind auf das Gesamtgewicht der Tensidmischung,

sowie nach den erfindungsgemäßen Verfahren herstellbare Melamin/Formaldehyd-Schaumstoffe sowie deren Verwendungen.

## Beschreibung

Die Erfindung betrifft Verfahren zur Herstellung von Melamin/Formaldehyd-Schaumstoffen, umfassend die Verfahrensschritte:
a) Herstellen einer wäßrigen Mischung M1) umfassend
   100 Gewichtsteile mindestens eines Melamin/Formaldehyd-Vorkondensats,
   2 bis 4 Gewichtsteile mindestens eines Härters,
   0,2 bis 5 Gewichtsteile einer Tensidmischung,
   0,1 bis 5 Gewichtsteile mindestens eines Salzes einer anorganischen Säure oder/oder einer organischen Carbonsäure,
   1 bis 40 Gewichtsteile mindestens eines Treibmittels,
   0 bis 5 Gewichtsteile mindestens eines Farbstoffs und/oder eines optischen Aufhellers,
   0 bis 20 Gewichtsteile eines oder mehrerer weiterer Additive, und
   25 bis 60 Gewichtsteile Wasser,
b) Erwärmen und Aufschäumen der Mischung M1) mittels Mikrowellenstrahlung,
c) Vernetzung und Härten des gebildeten Schaums mit Hilfe des Härters und Mikrowellenstrahlung,
d) Trocknung des Schaumstoffs mittels Mikrowellenstrahlung und
e) Tempern des getrockneten Schaumstoffs mittels Heißluft.

Weiterhin betrifft die Erfindung Melamin/Formaldehyd-Schaumstoffe sowie deren Verwendung.

Offenzellige elastische Schaumstoffe auf Basis von Melamin/Formaldehyd-Harzen sowie Verfahren zu ihrer Herstellung durch Erwärmen mit Heißluft, Wasserdampf oder Mikrowellenbestrahlung unter Aufschäumen und Vernetzen einer treibmittelhaltigen Lösung oder Dispersion eines Melamin/Formaldehyd-Vorkondensates, gefolgt von einem Trocknungs- und Temperschritt, sind bekannt und beispielsweise in EP-A 074 593, EP-A 017 671, EP-A 017 672 und EP-A 037 470 beschrieben. Solche Melamin/Formaldehyd-Schaumstoffe weisen in der Regel gute mechanische Eigenschaften, ein gutes akustisches und thermisches Isoliervermögen sowie eine geringe Brennbarkeit auf. Die insbesondere unter feuchten und warmen Bedingungen möglichen Formaldehydemissionen dieser Melamin/Formaldehyd-Schaumstoffe lassen sich durch geeignete Maßnahmen minimieren, beispielsweise durch den Zusatz von Formaldehydfängern wie in WO 06/134083 beschrieben, oder durch Wahl geeigneter Zusammensetzungen und Verarbeitungsparameter der Melamin/Formaldehyd-Vorkondensate, wie in WO 01/94436 und PCT/IB2011/053803 (Anmelde-Nr.) beschrieben.

Bei all diesen bekannten Herstellverfahren werden den Melamin/Formaldehyd-Vorkondensaten vor dem Verschäumen Tenside bzw. Emulgatoren zugesetzt. Als geeignete Tenside bzw. Emulgatoren werden üblicherweise anionische Tenside, kationische Tenside und nichtionische Tenside genannt.

So offenbaren beispielsweise die EP-A 017 671 und die EP-A 017 672 ebenfalls jene drei genannten Gruppen der anionischen, kationischen und nichtionischen Tenside als geeignet zur Herstellung der Melamin/Formaldehyd-Schaumstoffe, wobei jeweils in Beispiel 6 eine Mischung von mehr als 90 Gew.-% eines anionischen Tensids und weniger als 10 Gew.-% eines nichtionischen Tensids in Form eines nicht näher beschriebenen niedrig ethoxylierten gesättigten Fettalkohols, jeweils bezogen auf das Gesamtgewicht der eingesetzten Tenside, eingesetzt wird. Beispiel 8 offenbart jeweils als Tensidmischung den Einsatz von 27 Gew.-% eines anionischen und 73 Gew.-% des genannten nichtionischen Tensids. In allen anderen Beispielen der genannten Schriften kommt als Tensid jeweils nur ein anionisches Tensid zum Einsatz.

Die bekannten Melamin/Formaldehyd-Schaumstoffe sind hinsichtlich der Kombination guter mechanischer Kennwerte gepaart mit hohem Strömungswiderstand (entsprechend guter Schallabsorption) und niedriger Dichte noch verbesserungswürdig.

Aufgabe der vorliegenden Erfindung war es daher, Melamin/Formaldehyd-Schaumstoffe und deren Herstellverfahren zu finden, die eine verbesserte Kombination aus mechanisch /elastischen Eigenschaften und Strömungswiderständen, d.h. akustischen Eigenschaften, aufweisen.

Demgemäß wurden die eingangs genannten Verfahren zur Herstellung von Melamin/ Formaldehyd-Schaumstoffen gefunden, wobei erfindungswesentlich ist, dass die Mischung M1) als Tensidmischung ein Gemisch aus 50 bis 90 Gew.-% eines anionischen Tensids und 10 bis 50 Gew.-% eines nichtionischen Tensids enthält, wobei die Gewichtsprozente jeweils bezogen sind auf das Gesamtgewicht der Tensidmischung.

Weiterhin wurden nach den erfindungsgemäßen Verfahren herstellbare Melamin/Formaldehyd-Schaumstoffe sowie deren Verwendungen gefunden.

Die nach den erfindungsgemäßen Verfahren herstellbaren Melamin/Formaldehyd-Schaumstoffe weisen gegenüber bekannten Schäumen dieser Art eine verbesserte Kombination aus mechanisch/elastischen Eigenschaften und Strömungswiderständen, d.h. akustischen Eigenschaften, auf.

Die erfindungsgemäßen Verfahren, Gegenstände und Verwendungen werden im folgenden näher beschrieben.

Die erfindungsgemäßen Verfahren zur Herstellung von Melamin/Formaldehyd-Schaumstoffen umfassen die in der Folge noch genauer beschriebenen Verfahrensschritte:
a) Herstellen einer wäßrigen Mischung M1),
b) Erwärmen und Aufschäumen der Mischung M1) mittels Mikrowellenstrahlung,
c) Vernetzung und Härten des gebildeten Schaums mit Hilfe des Härters und Mikrowellenstrahlung,
d) Trocknung des Schaumstoffs mittels Mikrowellenstrahlung und
e) Tempern des getrockneten Schaumstoffs mittels Heißluft.

Nach Verfahrensschritt e) kann ein weiterer Verfahrensschritt f) durchgeführt werden, in dem der getemperte Schaumstoff ein- oder mehrmals komprimiert und wieder entspannt wird. Bevorzugt nach dem Verfahrensschritt e), aber auch erst nach dem Verfahrensschritt f), sofern dieser durchgeführt wird, kann der erhaltene Schaumstoffstrang zu Schaumstoffquadern geschnitten werden.

Die erfindungsgemäßen Verfahren werden bevorzugt kontinuierlich ausgeführt. Der Verfahrensschritt a), in dem die zu verschäumende Mischung M1) hergestellt wird, ist vor der Durchführung aller anderen Verfahrensschritte auszuführen. Die Verfahrensschritte b), c), d), und e) laufen zwar im wesentlichen zeitlich in der genannten Reihenfolge nacheinander ab, jedoch sind die einzelnen Verfahrensschritte in der Praxis nicht scharf voneinander abgrenzbar sondern gehen vielmehr ineinander über. So findet bereits während des Aufschäumens gemäß Verfahrensschritt b) eine geringe Vernetzung gemäß Verfahrensschritt c) statt, gleichzeitig werden bereits gewisse Mengen an Formaldehyd und Wasser aus dem Schaum ausgetragen, entsprechend Verfahrensschritt d). Weiterhin laufen beispielsweise beim Tempern des getrockneten Schaumstoffs gemäß Verfahrensschritt e) immer noch Vernetzungsvorgänge im Schaumstoff gemäß Verfahrensschritt c) ab, und es werden immer noch verbliebene Restmengen von Wasser und Formaldehyd entsprechend der Trocknung gemäß Verfahrensschritt d) ausgetragen. Trotz dieser kontinuierlichen Übergänge der einzelnen Vorgänge lassen sich die wesentlichen Merkmale der erfindungsgemäßen Verfahren und die zeitliche Abfolge der jeweils signifikanten Schaumbildungsprozesse durch die einzelnen Verfahrensschritte a) bis f) der erfindungsgemäßen Verfahren beschreiben.

Im Verfahrensschritt a) erfolgt das Herstellen einer wäßrigen Mischung M1) umfassend:
100 Gewichtsteile mindestens eines Melamin/Formaldehyd-Vorkondensats,
2 bis 4 Gewichtsteile, bevorzugt 2,2 bis 3,8 Gewichtsteile, besonders bevorzugt 2,7 bis 3,3 Gewichtsteile, mindestens eines Härters,
0,2 bis 5 Gewichtsteile, bevorzugt 0,5 bis 3 Gewichtsteile, besonders bevorzugt 1,25 bis 2,3 Gewichtsteile, einer Tensidmischung,
0,1 bis 5 Gewichtsteile, bevorzugt 0,5 bis 4 Gewichtsteile, besonders bevorzugt 1,1 bis 3,6 Gewichtsteile, mindestens eines Salzes einer anorganischen Säure oder einer organischen Carbonsäure,
1 bis 40 Gewichtsteile, bevorzugt 10 bis 35 Gewichtsteile, besonders bevorzugt 15 bis 21 Gewichtsteile, mindestens eines Treibmittels,
0 bis 5 Gewichtsteile, bevorzugt 0 bis 4 Gewichtsteile, besonders bevorzugt 0 bis 3 Gewichtsteile, mindestens eines Farbstoffs und/oder eines optischen Aufhellers,
0 bis 20 Gewichtsteile, bevorzugt 0 bis 10 Gewichtsteile, besonders bevorzugt 0 bis 5 Gewichtsteile, eines oder mehrerer weiterer Additive, und
25 bis 60 Gewichtsteile, bevorzugt 30 bis 50 Gewichtsteile, besonders bevorzugt 36 bis 44 Gewichtsteile, Wasser,
wobei erfindungswesentlich ist, dass die Mischung M1) als Tensidmischung ein Gemisch aus 50 bis 90 Gew.-%, bevorzugt 65 bis 90 Gew.-%, besonders bevorzugt 75 bis 90 Gew.-%, eines anionischen Tensids und 10 bis 50 Gew.-%, bevorzugt 10 bis 35 Gew.-%, besonders bevorzugt 10 bis 25 Gew.-%, eines nichtionischen Tensids enthält, wobei die Gewichtsprozente jeweils bezogen sind auf das Gesamtgewicht der Tensidmischung.

Als Melamin/Formaldehyd-Vorkondensate im Verfahrensschritt a) sind grundsätzlich alle dem Fachmann bekannten und in der Literatur beschriebenen Kondensationsprodukte aus Melamin und Formaldehyd einsetzbar. Bevorzugt wird ein Melamin/Formaldehyd-Vorkondensat eingesetzt wird, welches ein Molverhältnis von Melamin:Formaldehyd im Bereich von 1:1,5 bis 1:4, bevorzugt im Bereich von 1:1,6 bis 1:3,5, besonders bevorzugt im Bereich von 1:2 bis 1:3, aufweist. Bevorzugte Melamin/Formaldehyd-Vorkondensate haben ein mittleres Molekulargewicht (Zahlenmittel) Mₙ im Bereich von 200 g/mol bis 1000 g/mol, bevorzugt im Bereich von 200 g/mol bis 800 g/mol, besonders bevorzugt im Bereich von 200 g/mol bis 600 g/mol. Die Melamin/Formaldehyd-Vorkondensate können neben Melamin und Formaldehyd bis zu 50 Gew.-%, vorzugsweise bis 20 Gew.-%, (jeweils bezogen auf das Gewicht einkondensierten Melamins) anderer Duroplastbildner und bis zu 50 Gew.-%, vorzugsweise bis zu 20 Gew.-%, (jeweils bezogen auf das Gewicht einkondensierten Formaldehyds) anderer Aldehyde einkondensiert enthalten. Als Duroplastbildner kommen beispielsweise in Frage: alkyl- und arylalkylsubstituiertes Melamin, Harnstoff, Urethane, Carbonsäureamide, Dicyandiamid, Guanidin, Sulfurylamid, Sulfonsäureamide, aliphatische Amine, Glykole, Phenol und dessen Derivate. Als andere Aldehyde können z.B. Acetaldehyd, Trimethylolacetaldehyd, Acrolein, Benzaldehyd, Furfurol, Glyoxal, Glutaraldehyd, Phthalaldehyd und Terephthalaldehyd eingesetzt werden. Besonders bevorzugt sind aber Melamin/Formaldehyd-Vorkondensate, welche außer Melamin im wesentlichen keine anderen Duroplastbildner und außer Formaldehyd im wesentlichen keine anderen Aldehyde enthalten (d.h., daß der Gehalt an anderen Duroplastbildnern und an anderen Aldehyden jeweils weniger als 1 Gew.-%, bezogen auf das Gewicht des Melamin/Formaldehyd-Vorkondensats, beträgt). Kommerziell verfügbare Melamin/Formaldehyd-Vorkondensate sind für eine Vielzahl von Anwendungsgebieten, beispielsweise für die Weiterverarbeitung zu Leimen, einsetzbar. Für einige dieser Anwendungsgebiete ist es vorteilhaft, sulfitgruppenhaltige Melamin/Formaldehyd-Vorkondensate einzusetzen (die Bezeichnung "sulfitgruppenhaltig" wird in der Literatur oft verwendet und daher auch in dieser Anmeldung beibehalten, obwohl durch die Reaktion von beispielsweise Sulfiten, Hydrogensulfiten, Disulfiten oder Dithioniten mit den Hydroxymethylgruppen der Melamin-Formaldehyd-Kondensate wahrscheinlich Aminomethansulfonatgruppen gebildet werden, s. Ullmann's Encyclopedia of Industrial Chemistry, Vol. 3, Hans Diem et al., "Amino Resins", S. 95-97, Wiley-VCH Verlag GmbH & Co. KGaA, online publiziert 15.10.2010, DOI: 10.1002/14356007.a02_115.pub2). Solche sulfitgruppenhaltigen Melamin/Formaldehyd-Vorkondensate sind beispielsweise nach EP-B 37470 erhältlich, nach der durch Zusatz von 1 bis 20 Gew.-% Natriumhydrogensulfit bei der Kondensation von Melamin und Formaldehyd einkondensierte Sulfitgruppen erhalten werden. Auch solche sulfitgruppenhaltigen Melamin/Formaldehyd-Vorkondensate sind in den erfindungsgemäßen Verfahren einsetzbar, wobei bevorzugte Sulfitgruppengehalte, gerechnet als -SO₃ und bezogen auf das Gesamtgewicht des Melamin/Formaldehyd-Vorkondensats, im Bereich von 0,1 bis 3 Gew.-% liegen. Melamin/Formaldehyd-Vorkondensate mit einem Sulfitgruppengehalt, gerechnet als -SO₃ und bezogen auf das Gesamtgewicht des Melamin/Formaldehyd-Vorkondensats, von weniger als 0,1 Gew.-% werden als sulfitgruppenfrei bezeichnet. Weitere Einzelheiten über geeignete Melamin/Formaldehyd-Vorkondensate finden sich beispielsweise in Houben-Weyl, Methoden der organischen Chemie, Band 14/2, 1963, Seiten 319 bis 402.

Zur Emulgierung des Treibmittels und zur Stabilisierung des Schaums in den erfindungsgemäßen Verfahren ist im Verfahrensschritt a) der Zusatz von Tensiden erforderlich. Erfindungsgemäß umfasst die Mischung M1) als Tensidmischung ein Gemisch aus 50 bis 90 Gew.-%, bevorzugt 65 bis 90 Gew.-%, besonders bevorzugt 75 bis 90 Gew.-%, eines anionischen Tensids und 10 bis 50 Gew.-%, bevorzugt 10 bis 35 Gew.-%, besonders bevorzugt 10 bis 25 Gew.-%, eines nichtionischen Tensids, wobei die Gewichtsprozente jeweils bezogen sind auf das Gesamtgewicht der Tensidmischung.

Geeignete anionische Tenside sind beispielsweise Diphenylenoxidsulfonate, Alkan- und Alkylbenzolsulfonate, Alkylnaphthalinsulfonate, Olefinsulfonate, Alkansulfonate, Alkylethersulfonate, Fettalkoholsulfate, Fettalkoholpolyglykolethersulfate, Ethersulfate, alpha-Sulfofettsäureester, Acylaminoalkansulfonate, Acylisethionate, Alkylethercarboxylate, N-Acylsarcosinate, Alkyl- und Alkyletherphosphate.
Bevorzugte anionische Tenside sind Salze, bevorzugt Alkalimetallsalze, besonders bevorzugt Natriumsalze, von Alkansulfonaten, bevorzugt von n-Alkansulfonaten, besonders bevorzugt von n-Alkansulfonaten mit 13 bis 17 Kohlenstoffatomen in der Alkankette. Diese Alkansulfonate und ihre Herstellung sind dem Fachmann bekannt und in der Literatur beschrieben. Ein bevorzugter Syntheseweg ist die Sulphoxidation, also die Umsetzung mit SO₂ und O₂, der gewünschten Alkane, bevorzugt n-Alkane, besonders bevorzugt n-Alkane mit 13-17 Kohlenstoffatomen, unter Einwirkung von UV-Licht. Dabei werden bevorzugt Monosulfonate erhalten, in untergeordneter Menge werden aber auch Di- oder Polysulphonate gebildet. Die Sulfonierung erfolgt zum überwiegenden Teil an den sekundären Kohlenstoffatomen, da die endständigen Kohlenstoffatome der Alkanketten deutlich weniger reaktiv sind. Ganz besonders bevorzugte anionische Tenside entsprechen daher der Formel (I),

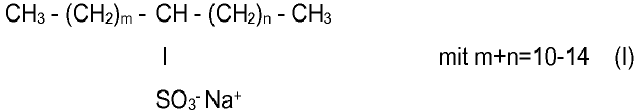

Weitere bevorzugte anionische Tenside sind Salze, bevorzugt Alkalimetallsalze, besonders bevorzugt Natriumsalze, von Fettalkoholpolyglykolethersulfaten, bevorzugt von solchen Fettalkoholpolyglykolethersulfaten, die durch Umsetzung gesättigter C₈-C₂₂-Fettalkohole mit einem 2-bis 10-fachen, bevorzugt 4-fachen, molaren Überschuß von Ethylenoxid und anschließender Sulfatierung erhältlich sind. Diese Fettalkoholpolyglykolethersulfate und ihre Herstellung sind dem Fachmann bekannt und in der Literatur beschrieben. Ein weiteres ganz besonders bevorzugtes anionisches Tensid entspricht einem Fettalkoholpolyglykolethersulfat der Formel (II):

CH₃-(CH₂)ⱼ-O-(CH₂-CH₂-O)ₖ-SO₃Na mit j = 11 bis 16, k = 3 bis 10 (II)

Als Bestandteil der Tensidmischung geeignete nichtionische Tenside enthalten keine anionischen oder kationischen Gruppen, geeignete nichtionische Tenside sind beispielsweise Alkylphenolpolyglykolether, Fettalkoholpolyglykolether, Fettsäurepolyglykolether, Fettsäurealkanolamide, EO/PO-Blockcopolymere, nichtionische Aminoxide, Glycerinfettsäureester, Sorbitanester und Alkylpolyglucoside. Bevorzugte nichtionische Tenside sind Alkylpolyethylenglykolether, insbesondere solche, welche erhältlich sind durch Umsetzung eines linearen gesättigten C₁₂- bis C₁₈-Fettalkohols mit einem 30- bis 120-fachen, bevorzugt 70- bis 90-fachen, besonders bevorzugt 80-fachen, molaren Überschuß von Ethylenoxid. Diese nichtionischen Tenside und ihre Herstellung sind dem Fachmann bekannt und in der Literatur beschrieben.

Erfindungsgemäß enthält die Mischung M1) pro 100 Gewichtsteile Melamin/Formaldehyd-Vorkondensat 0,2 bis 5 Gewichtsteile, bevorzugt 0,5 bis 3 Gewichtsteile, besonders bevorzugt 1,25 bis 2,3 Gewichtsteile, der genannten Tensidmischungen.

Um aus der wäßrigen Mischung M1) enthaltend das Melamin/Formaldehyd-Vorkondensat einen Schaum zu erzeugen, muss der Mischung im Verfahrensschritt a) mindestens ein Treibmittel zugesetzt werden. Die im Rahmen der vorstehend genannten Bereiche gewählte Menge des zugesetzten Treibmittels richtet sich in der Regel nach der erwünschten Dichte des Schaumstoffs. Prinzipiell können bei dem erfindungsgemäßen Verfahren sowohl physikalische als auch chemische Treibmittel angewandt werden. Als physikalische Treibmittel bieten sich z.B. an: Kohlenwasserstoffe, halogenierte, insbesondere fluorierte Kohlenwasserstoffe, Alkohole, Äther, Ketone und Ester. Bevorzugte physikalische Treibmittel sind solche mit einem Siedepunkt zwischen 0 und 80°C.
Besonders bevorzugt enthält die Mischung M1) als Treibmittel Butan und/oder Pentan. Ganz besonders bevorzugt als Treibmittel ist eine Mischung aus 30 bis 90 Gew.%, insbesondere 70 bis 85 Gew.-%, n-Pentan und 70 bis 10 Gew.-%, insbesondere 30 bis 15 Gew.-%, iso-Pentan, wobei die Gew.-% jeweils bezogen sind auf das Gesamtgewicht der Treibmittelmischung. Erfindungsgemäß enthält die Mischung M1) pro 100 Gewichtsteile Melamin/Formaldehyd-Vorkondensat 1 bis 40 Gewichtsteile, bevorzugt 10 bis 35 Gewichtsteile, besonders bevorzugt 15 bis 21 Gewichtsteile, der genannten Treibmittel.

Als Härter werden der Mischung M1) im Verfahrensschritt a) acide Verbindungen eingesetzt, die die Weiterkondensation des Melamin/Formaldehyd-Vorkondensat katalysieren. In Frage kommen anorganische und organische Säuren, z.B. Salzsäure, Schwefelsäure, Phosphorsäure, Salpetersäure, Ameisensäure, Essigsäure, Oxalsäure, Toluolsulfonsäuren, Amidosulfonsäuren sowie Säureanhydride. Als bevorzugter Härter wird in den erfindungsgemäßen Verfahren Ameisensäure eingesetzt. Erfindungsgemäß enthält die Mischung M1) pro 100 Gewichtsteile Melamin/Formaldehyd-Vorkondensat 2 bis 4 Gewichtsteile, bevorzugt 2,2 bis 3,8 Gewichtsteile, besonders bevorzugt 2,7 bis 3,3 Gewichtsteile, der genannten Härter.

Der Mischung M1) werden in Verfahrensschritt a) ein oder mehrere Salze einer anorganischen Säure und/oder einer organischen Carbonsäure zugesetzt. Besonders geeignet sind ein oder mehrere Salze, insbesondere Natrium- und/oder Kaliumsalze, der Sauerstoffsäuren des Schwefels, der Ameisensäure, der Essigsäure und der Zitronensäure. Auch besonders geeignet sind Chloride, Bromide, Nitrate und Dihydrogenphosphate, insbesondere in Form der Natrium- und/oder Kaliumsalze. Bevorzugt als Salze einer anorganischen Säure und/oder einer organischen Carbonsäure sind insbeondere ein oder mehrere Verbindungen ausgewählt aus Natrium- und Kaliumformiaten, -acetaten, -citraten, -chloriden, -bromiden, -sulfaten, -sulfiten, -nitraten und dihydrogenphosphaten. Ganz besonders geeignete Salze einer anorganischen Säure und/oder einer organischen Carbonsäure sind Formiate, Citrate und deren Mischungen, insbesondere ein Gemisch aus 40 bis 90 Gew.-%, bevorzugt 45 bis 70 Gew.-%, besonders bevorzugt 50 bis 60 Gew.-%, Natriumformiat und 10 bis 60 Gew.-%, bevorzugt 30 bis 55 Gew.-%, besonders bevorzugt 40 bis 50 Gew.-%, Natriumcitrat, wobei die Gewichtsprozente jeweils bezogen sind auf das Gesamtgewicht des Natriumformiats und Natriumcitrats.
Erfindungsgemäß enthält die Mischung M1) pro 100 Gewichtsteile Melamin/Formaldehyd-Vorkondensat 0,1 bis 5 Gewichtsteile, bevorzugt 0,5 bis 4 Gewichtsteile, besonders bevorzugt 1,1 bis 3,6 Gewichtsteile, der genannten Salze einer anorganischen Säure und/oder einer organischen Carbonsäure.

Für manche Anwendungen ist es wünschenswert, dass die nach den erfindungsgemäßen Verfahren herstellbaren Melamin/Formaldehyd-Schaumstoffe, die an sich keine Eigenfarbe besitzen, gefärbt sind. Zur Herstellung gefärbter Melamin/Formaldehyd-Schaumstoffe können im Verfahrensschritt a) der erfindungsgemäßen Verfahren der wässrigen Mischung M1) grundsätzlich alle dem Fachmann bekannten und in der Literatur beschriebenen Farbstoffe zugesetzt werden. Der Begriff Farbstoffe umfaßt sowohl solche Farbstoffe, die in der wäßrigen Mischung M1) löslich sind, als auch Farbpigmente, die in der Mischung M1) unlöslich sind. Pigmente stören im allgemeinen aber den Schäumprozess. Bevorzugt werden deshalb in der Mischung M1) lösliche Farbstoffe eingesetzt, um eine Beeinträchtigung des Schäumvorgangs möglichst zu unterbinden. Besonders zum Einsatz in den erfindungsgemäßen Verfahren geeignete Farbstoffe werden in der WO 96/20229 ausführlich beschrieben. Neben oder anstelle der Farbstoffe können der Mischung M1) auch optische Aufheller zugesetzt werden. Optische Aufheller sind Verbindungen, die im UV-Bereich Licht absorbieren und bei Wellenlängen im Bereich von 400 bis 500 nm eine Fluoreszenzemission aufweisen. Erfindungsgemäß enthält die Mischung M1) pro 100 Gewichtsteile Melamin/Formaldehyd-Vorkondensat 0 bis 5 Gewichtsteile, bevorzugt 0 bis 4 Gewichtsteile, besonders bevorzugt 0 bis 3 Gewichtsteile, der genannten Farbstoffe und/oder optischen Aufheller.
Der Einsatz von optischen Aufhellern ist dann bevorzugt, wenn ein Gelbstich ungefärbter Melamin/Formaldehyd-Schaumstoffe verhindert werden soll (der beispielsweise entstehen kann, wenn Melamin-Formaldehyd-Vorkondensate mit hohen Sulfitgehalten als Einsatzstoff gewählt werden oder in den Verfahrensschritten d) oder e) hohe Temperaturen gewählt werden). Sofern gefärbte Melamin/Formaldehyd-Schaumstoffe hergestellt werden sollen, ist außer dem Zusatz von einem oder mehreren Farbstoffen auch der Zusatz mindestens eines optischen Aufhellers zur Mischung M1) bevorzugt, um beispielsweise eine Aufhellung und/oder Brillanzsteigerung der Farbe zu bewirken. Sofern, beispielsweise aus den genannten Gründen, optische Aufheller eingesetzt werden, werden diese der Mischung M1) insbesondere in Mengen von 0,1 bis 5 Gewichtsteilen pro 100 Gewichtsteile Melamin/Formaldehyd-Vorkondensat zugesetzt. Geeignete optische Aufheller sind ebenfalls in der Literatur beschrieben und dem Fachmann bekannt. Bevorzugt einsetzbare optische Aufheller sind Verbindungen die sich von Stilben ableiten, wie z. B. die Alkylierungsprodukte der 4,4'-Diamino-stilben-2,2'-disulfonsäure, Naphthalimide, insbesondere N-Methyl-4-methoxy-naphthalimid.

Die gemäß Verfahrensschritt a) hergestellte wässrige Mischung M1) ist vorzugsweise frei von weiteren Additiven. Für manche Zwecke kann es jedoch günstig sein, eine Mischung M1) einzusetzen, die pro 100 Gewichtsteile Melamin/Formaldehyd-Vorkondensat 0 bis 20 Gewichtsteile, bevorzugt 0 bis 10 Gewichtsteile, besonders bevorzugt 0 bis 5 Gewichtsteile, weiterer Additive umfaßt. Als in solchen Mengen einsetzbare weitere Additive seien beispielsweise genannt: Flammschutzmittel, im Brandfall intumeszierend wirkende und/oder die Verkohlung fördernde Additive, Additive zur Herabsetzung der Brandgastoxizität, Formaldehydfänger, UV-Stabilisatoren, und Wärmestabilisatoren. Insbesondere dann, wenn sulfitgruppenhaltige Melamin/Formaldehyd-Vorkondensate eingesetzt werden, ist es vorteilhaft, wenn die Mischung M1) UV-Stabilisatoren und/oder Wärmestabilisatoren in den genannten Mengen, insbesondere in Mengen von 0,01 bis 5, bevorzugt von 0,03 bis 0,5, besonders bevorzugt von 0,05 bis 0,3 Gewichtsteilen, umfasst. Besonders vorteilhaft ist es, wenn die Mischung M1) beim Einsatz sulfitgruppenhaltiger Melamin/Formaldehyd-Vorkondensate als weiteres Additiv basisches Kupfercarbonat, x CuCO₃ • Cu(OH)2 mit x = 1 oder 2, in den genannten Mengen umfasst, welches UV- und wärmestabilisierend wirkt. Die als weitere Additive einsetzbaren Verbindungen als solche sind dem Fachmann bekannt und in der Literatur beschrieben.

Die Konzentration der Melamin/Formaldehyd-Vorkondensate in der Mischung M1), die in Form einer Lösung oder einer Dispersion vorliegen kann, kann durch die in der Mischung enthaltene Wassermenge eingestellt werden. Erfindungsgemäß enthält die Mischung M1) pro 100 Gewichtsteile Melamin/Formaldehyd-Vorkondensat 25 bis 60 Gewichtsteile, bevorzugt 30 bis 50 Gewichtsteile, besonders bevorzugt 36 bis 44 Gewichtsteile, Wasser. Die bevorzugte Viskosität der Mischung M1) liegt zwischen 1 und 3000 dPa s, vorzugsweise zwischen 5 und 2000 dPa s (jeweils bei 20°C).

Eine im Verfahrensschritt a) hergestellte bevorzugte wäßrige Mischung M1) basierend auf sulfitgruppenfreiem Melamin/Formaldehyd-Vorkondensat umfaßt:
100 Gewichtsteile sulfitgruppenfreies Melamin/Formaldehyd-Vorkondensat mit einem Molverhältnis von Melamin:Formaldehyd im Bereich von 1:1,5 bis 1:4, bevorzugt im Bereich von 1:1,6 bis 1:3,5, besonders bevorzugt im Bereich von 1:2 bis 1:3, und einem mittleren Molekulargewicht (Zahlenmittel) Mₙ im Bereich von 200 g/mol bis 1000 g/mol, bevorzugt im Bereich von 200 g/mol bis 800 g/mol, besonders bevorzugt im Bereich von 200 g/mol bis 600 g/mol, welches bis zu 50 Gew.-%, vorzugsweise bis 20 Gew.-%, (jeweils bezogen auf das Gewicht einkondensierten Melamins) andere Duroplastbildner und bis zu 50 Gew.-%, vorzugsweise bis zu 20 Gew.-%, (jeweils bezogen auf das Gewicht einkondensierten Formaldehyds) anderer Aldehyde, ganz besonders bevorzugt aber außer Melamin im wesentlichen keine anderen Duroplastbildner und außer Formaldehyd im wesentlichen keine anderen Aldehyde enthält,
2 bis 4 Gewichtsteile, bevorzugt 2,2 bis 3,8 Gewichtsteile, besonders bevorzugt 2,7 bis 3,3 Gewichtsteile, mindestens einer anorganischen oder organischen Säure, vorzugsweise Ameisensäure, als Härter,
0,2 bis 5 Gewichtsteile, bevorzugt 0,5 bis 3 Gewichtsteile, besonders bevorzugt 1,25 bis 2,3 Gewichtsteile einer Tensidmischung aus 50 bis 90 Gew.-%, bevorzugt 65 bis 90 Gew.-%, besonders bevorzugt 75 bis 90 Gew.-%, mindestens eines anionischen Tensids, vorzugsweise eines Alkalimetall n-Alkansulfonates mit 13 bis 17 Kohlenstoffatomen in der Alkankette, ganz besonders bevorzugte eines anionischen Tensids entsprechend der Formel (I), 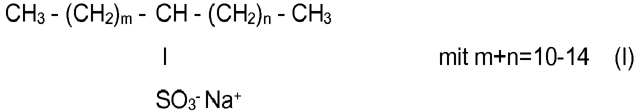
und 10 bis 50 Gew.-%, bevorzugt 10 bis 35 Gew.-%, besonders bevorzugt 10 bis 25 Gew.-%, mindestens eines nichtionischen Tensids, insbesondere eines Alkylpolyethylenglykolethers,
welcher erhältlich ist durch Umsetzung eines linearen gesättigten C₁₂- bis C₁₈-Fettalkohols mit einem 30- bis 120-fachen, bevorzugt 70- bis 90-fachen, besonders bevorzugt 80-fachen, molaren Überschuß von Ethylenoxid, wobei die Gewichtsprozente jeweils bezogen sind auf das Gesamtgewicht der Tensidmischung,
0,1 bis 5 Gewichtsteile, bevorzugt 0,5 bis 4 Gewichtsteile, besonders bevorzugt 1,1 bis 3,6 Gewichtsteile, insbesondere 2,2 bis 3,6 Gewichtsteile, mindestens eines Salzes einer anorganischen Säure und/oder einer organischen Carbonsäure, bevorzugt eines Formiats, Citrats oder einer Mischung von Formiaten und Citraten, besonders bevorzugt einer Mischungen aus 40 bis 90 Gew.-%, bevorzugt 45 bis 70 Gew.-%, besonders bevorzugt 50 bis 60 Gew.-%, Natriumformiat und 10 bis 60 Gew.-%, bevorzugt 30 bis 55 Gew.-%, besonders bevorzugt 40 bis 50 Gew.-%, Natriumcitrat, wobei die Gewichtsprozente jeweils bezogen sind auf das Gesamtgewicht des Natriumformiats und Natriumcitrats,
1 bis 40 Gewichtsteile, bevorzugt 10 bis 35 Gewichtsteile, besonders bevorzugt 15 bis 21 Gewichtsteile, mindestens eines Treibmittels, bevorzugt eines physikalischen Treibmittels mit einem Siedepunkt zwischen 0 und 80°C, besonders bevorzugt Butan, Pentan oder ein Gemisch aus Butan und Pentan, ganz besonders bevorzugt einer Treibmittelmischung aus 30 bis 90 Gew.%, insbesondere 70 bis 85 Gew.-%, n-Pentan und 70 bis 10 Gew.-%, insbesondere 30 bis 15 Gew.-%, iso-Pentan, wobei die Gew.-% jeweils bezogen sind auf das Gesamtgewicht der Treibmittelmischung,
0 bis 5 Gewichtsteile, bevorzugt 0 bis 4 Gewichtsteile, besonders bevorzugt 0 bis 3 Gewichtsteile, mindestens eines Farbstoffs und/oder eines optischen Aufhellers,
0 bis 20 Gewichtsteile, bevorzugt 0 bis 10 Gewichtsteile, besonders bevorzugt 0 bis 5 Gewichtsteile, eines oder mehrerer weiterer Additive, und
25 bis 60 Gewichtsteile, bevorzugt 30 bis 50 Gewichtsteile, besonders bevorzugt 36 bis 44 Gewichtsteile, Wasser.

Eine im Verfahrensschritt a) hergestellte bevorzugte wäßrige Mischung M1) basierend auf sulfitgruppenhaltigem Melamin/Formaldehyd-Vorkondensat umfaßt:
100 Gewichtsteile Melamin/Formaldehyd-Vorkondensat mit einem Sulfitgruppengehalt, gerechnet als -SO₃ und bezogen auf das Gesamtgewicht an Melamin/Formaldehyd-Vorkondensat, im Bereich von 0,1 bis 3 Gew.-% und mit einem Molverhältnis von Melamin:Formaldehyd im Bereich von 1:1,5 bis 1:4, bevorzugt im Bereich von 1:1,6 bis 1:3,5, besonders bevorzugt im Bereich von 1:2 bis 1:3, und einem mittleren Molekulargewicht (Zahlenmittel) Mₙ im Bereich von 200 g/mol bis 1000 g/mol, bevorzugt im Bereich von 200 g/mol bis 800 g/mol, besonders bevorzugt im Bereich von 200 g/mol bis 600 g/mol, welches bis zu 50 Gew.-%, vorzugsweise bis 20 Gew.-%, (jeweils bezogen auf das Gewicht einkondensierten Melamins) andere Duroplastbildner und bis zu 50 Gew.-%, vorzugsweise bis zu 20 Gew.-%, (jeweils bezogen auf das Gewicht einkondensierten Formaldehyds) anderer Aldehyde, ganz besonders bevorzugt aber außer Melamin im wesentlichen keine anderen Duroplastbildner und außer Formaldehyd im wesentlichen keine anderen Aldehyde enthält,
2 bis 4 Gewichtsteile, bevorzugt 2,2 bis 3,8 Gewichtsteile, besonders bevorzugt 2,7 bis 3,3 Gewichtsteile, mindestens einer anorganischen oder organischen Säure, vorzugsweise Ameisensäure, als Härter,
0,2 bis 5 Gewichtsteile, bevorzugt 0,5 bis 3 Gewichtsteile, besonders bevorzugt 1,25 bis 2,3 Gewichtsteile, einer Tensidmischung aus 50 bis 90 Gew.-%, bevorzugt 65 bis 90 Gew.-%, besonders bevorzugt 75 bis 90 Gew.-%, mindestens eines anionischen Tensids, vorzugsweise eines Alkalimetall n-Alkansulfonates mit 13 bis 17 Kohlenstoffatomen in der Alkankette, ganz besonders bevorzugte eines anionischen Tensids entsprechend der Formel (I), 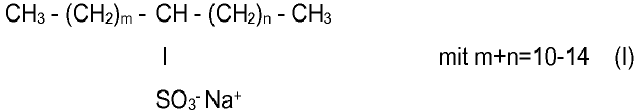 und 10 bis 50 Gew.-%, bevorzugt 10 bis 35 Gew.-%, besonders bevorzugt 10 bis 25 Gew.-%, mindestens eines nichtionischen Tensids, insbesondere eines Alkylpolyethylenglykolethers, welcher erhältlich ist durch Umsetzung eines linearen gesättigten C₁₂- bis C₁₈-Fettalkohols mit einem 30- bis 120-fachen, bevorzugt 70- bis 90-fachen, besonders bevorzugt 80-fachen, molaren Überschuß von Ethylenoxid, wobei die Gewichtsprozente jeweils bezogen sind auf das Gesamtgewicht der Tensidmischung,
0,1 bis 5 Gewichtsteile, bevorzugt 0,5 bis 4 Gewichtsteile, besonders bevorzugt 1,1 bis 3,6 Gewichtsteile, insbesondere 1,1 bis 1,9 Gewichtsteile, mindestens eines Salzes einer anorganischen Säure und/oder einer organischen Carbonsäure, bevorzugt mindestens eines Formiats, eines Citrats oder deren Mischung, besonders bevorzugt einer Mischungen aus 40 bis 90 Gew.-%, bevorzugt 45 bis 70 Gew.-%, besonders bevorzugt 50 bis 60 Gew.-%, Natriumformiat und 10 bis 60 Gew.-%, bevorzugt 30 bis 55 Gew.-%, besonders bevorzugt 40 bis 50 Gew.-%, Natriumcitrat, wobei die Gewichtsprozente jeweils bezogen sind auf das Gesamtgewicht des Natriumformiats und Natriumcitrats,
1 bis 40 Gewichtsteile, bevorzugt 10 bis 35 Gewichtsteile, besonders bevorzugt 15 bis 21 Gewichtsteile, mindestens eines Treibmittels, bevorzugt eines physikalischen Treibmittels mit einem Siedepunkt zwischen 0 und 80°C, besonders bevorzugt Butan, Pentan oder ein Gemisch aus Butan und Pentan, ganz besonders bevorzugt einer Treibmittelmischung aus 30 bis 90 Gew.%, insbesondere 70 bis 85 Gew.-%, n-Pentan und 70 bis 10 Gew.-%, insbesondere 30 bis 15 Gew.-%, iso-Pentan, wobei die Gew.-% jeweils bezogen sind auf das Gesamtgewicht der Treibmittelmischung,
0 bis 5 Gewichtsteile, bevorzugt 0 bis 4 Gewichtsteile, besonders bevorzugt 0 bis 3 Gewichtsteile, mindestens eines Farbstoffs und/oder eines optischen Aufhellers, insbesondere 0,1 bis 5 Gewichtsteile eines optischen Aufhellers, bevorzugt eines optischen Aufhellers, der sich von Stilben ableitet, insbesondere einem Alkylierungsprodukt der 4,4'-Diamino-stilben-2,2'-disulfonsäure, oder der ein Naphthalimid ist,
0 bis 20 Gewichtsteile, bevorzugt 0 bis 10 Gewichtsteile, besonders bevorzugt 0 bis 5 Gewichtsteile, eines oder mehrerer weiterer Additive, insbesondere 0,01 bis 5, bevorzugt von 0,03 bis 0,5, besonders bevorzugt von 0,05 bis 0,3 Gewichtsteile mindestens eines UV- und/oder Wärmestabilisators, bevorzugt eines basischen Kupfercarbonats, x CuCO₃ • Cu(OH)2 mit x = 1 oder 2,
25 bis 60 Gewichtsteile, bevorzugt 30 bis 50 Gewichtsteile, besonders bevorzugt 36 bis 44 Gewichtsteile, Wasser.

Im Verfahrensschritte a) der erfindungsgemäßen Verfahren wird aus den genannten Komponenten die Mischung M1) hergestellt. Dies kann grundsätzlich mit allen dem Fachmann bekannten und in der Literatur beschriebenen Mischvorrichtungen und Mischverfahren durchgeführt werden. Geeignete Mischvorrichtungen sind beispielsweise beschrieben in "Mischen beim Herstellen und Verarbeiten von Kunststoffen", H. Pahl, Vdl-Verlag 1986, und in Saechtling, Kunststofftaschenbuch, Carl Hanser Verlag München Wien, 29. Aufl., 2004. Geeignete Mischvorrichtungen sind beispielsweise Extruder und dynamische und statische Mischer, beispielsweise Rührkessel, einwellige Rührwerke mit Abstreifvorrichtungen, insbesondere sogenannte Pastenrührwerke, mehrwellige Rührwerke, insbesondere PDSM-Mischer, Feststoffmischer sowie Misch-Knetreaktoren (z. B. ORP, CRP, AP. DTP der Firma List und Reaktotherm der Firma Krauss-Maffei), Doppelmuldenkneter (Trogmischer) und Stempelkneter (Innenmischer) oder Rotor/Stator-Systeme (z. B. Dispax der Firma Ika), Kreislaufreaktoren oder mit Füllkörpern oder Umlenkvorrichtungen versehene Rohrmischer. Das Beschicken der Mischvorrichtungen kann kontinuierlich oder diskontinuierlich in üblicher Weise erfolgen. Pulverförmige Komponenten können in freiem Zulauf, beispielsweise über eine Differentialdosierwaage eingeführt werden. Plastische Massen, beispielsweise hochviskose Teilmischungen aus Melamin/Formaldehyd-Vorkondensat und wenig Wasser, können direkt aus einem Extruder eingespeist oder über eine Zahnradpumpe, die insbesondere bei hohen Viskositäten und hohen Drücken von Vorteil ist, zugespeist werden. Flüssige Medien können über ein geeignetes Pumpenaggregat zudosiert werden. Es ist grundsätzlich möglich alle Komponenten, d.h. Melamin/Formaldehyd-Vorkondensat, Härter, Tensidmischung, Salze einer anorganischen Säure und/oder einer organischen Carbonsäure, Treibmittel, Wasser und -sofern vorhanden- Farbstoffe und/oder optische Aufheller und weitere Additive- in den genannten Mengen gleichzeitig miteinander zu vermischen und die so gebildete Mischung M1) den folgenden Verfahrensschritte zuzuführen. Es können aber auch zwei oder mehr der genannten Komponenten vorgemischt und die noch fehlenden Komponenten gleichzeitig oder nacheinander zugemischt werden. Ebenso ist es möglich, der Mischung M1) jeweils die Gesamtmenge der genannten Komponenten zuzusetzen, die einzelnen Komponenten können aber auch in Form mehrerer Teilmengen der Mischung M1) zugesetzt werden.

In einer bevorzugten Ausführungsform der erfindungsgemäßen Verfahren werden im Verfahrensschritt a) in die Mischung M1) vor Ausführung des Verfahrensschritts b) ein oder mehrere gegenüber den Komponenten der Mischung M1) unreaktive Gase, beispielsweise Edelgase, vorzugsweise Luft und/oder Stickstoff, aus Explosionsschutz- und Wirtschaftlichkeitsgründen bevorzugt Stickstoff, eingemischt. Diese Gaseinmischung kann entweder in die fertige Mischung M1) erfolgen, die Gaseinmischung kann aber auch in einzelne Komponenten oder Teilmischungen einzelner Komponenten der Mischung M1) erfolgen. Diese Gaseinmischung, insbesondere von Luft und/oder Stickstoff, bevorzugt Stickstoff, erfolgt mit dem Fachmann bekannten Vorrichtungen, beispielsweise durch Einblasen über Kompressoren und Düsen, bevorzugt unter Druck. Die eingemischten Gase liegen in der Mischung M1) teilweise gelöst vor, teilweise bilden sie eine Dispersion fein verteilter Bläschen, bevorzugt mit einem mittleren Blasendurchmesser (D₅₀, zahlengemittelt) von 10 bis 50 µm, insbesondere 20 bis 30 µm. Der Anteil gelöster bzw. dispergierter Gasmengen ist dabei abhängig von Temperatur-, Druck- und Viskositätsverhältnissen sowie den Mengenströmen. Diese in der Mischung M1) enthaltenen Gase wie Luft und/oder Stickstoff, bevorzugt Stickstoff, wirken im nachfolgenden Schaumbildungsprozeß als Nukleierungsmittel für die Blasenbildung.

In einer bevorzugten Ausführungsform der erfindungsgemäßen Verfahren erfolgt die Herstellung der Mischung M1) gemäß Verfahrensschritt a) dergestalt, daß aus Wasser, Melamin/Formaldehyd-Vorkondensat und den Salzen einer anorganischen Säure und/oder einer organischen Carbonsäure in einem Rührkessel eine erste Teilmischung hergestellt wird, aus der Tensidmischung und dem Treibmittel in einem statischen oder dynamischen Mischer eine zweite Teilmischung hergestellt wird, die beiden Teilmischungen und, falls vorhanden, Farbstoff und/oder optischer Aufheller und weitere Additive anschließend in einem Extruder oder einem anderen dynamischen Mischer miteinander gemischt werden, und abschließend in einem weiteren statischen oder dynamischen Mischer der Härter zugegeben wird. Insbesondere erfolgt die Herstellung der Mischung M1) gemäß Verfahrensschritt a) dergestalt, daß bei der Herstellung der zweiten Teilmischung in dem statischen oder dynamischen Mischer und/oder bei der Vermischung der beiden Teilmischungen in dem Extruder oder anderen dynamischen Mischer Luft und/oder Stickstoff eingemischt wird.

In einer besonders bevorzugten Ausführungsform der erfindungsgemäßen Verfahren werden im Verfahrensschritt a) in einem kontinuierlichen Prozeß in einem Rührkessel mit von oben oder unten, bevorzugt unten, angebrachten Rührelementen, insbesondere einem oder mehreren Rührschaufeln, Rührblättern oder Rührfingern, die Gesamtmenge des Melamin/Formaldehyd-Vorkondensats und die Gesamtmenge des Wassers und die Gesamtmenge der Salze einer anorganischen Säure und/oder einer organischen Carbonsäure und eine Teilmenge der vorab separat hergestellten Tensidmischung, bevorzugt 5 bis 20 Gew.-% der gesamten Tensidmischung, und -sofern vorhanden- die Gesamtmenge der Farbstoffe und/oder optischen Aufheller und weiteren Additive bei Normaldruck und einer Temperatur im Bereich von 0 bis 50°C, bevorzugt 20 bis 40°C, besonders bevorzugt 25 bis 35°C, vermischt. Zeitgleich zur Herstellung dieser Teilmischung im Rührkessel erfolgt auf verfahrenstechnisch separatem Weg die Herstellung einer zweiten Teilmischung, indem jeweils über Dosierpumpen die Gesamtmenge des Treibmittels und eine Teilmenge der vorab separat hergestellten Tensidmischung, bevorzugt 80 bis 95 Gew.-% der gesamten Tensidmischung, in einem statischen Mischer, bevorzugt einem mit Füllkörpern gefüllten Rohr, bei einem Druck von 2 bis 20 bar, und einer Temperatur von 0 bis 30°C, bevorzugt 0 bis 15°C, miteinander vermischt werden, wobei besonders bevorzugt in diese zweite Teilmischung kontinuierlich Luft und/oder Stickstoff, bevorzugt Stickstoff, mit einem Druck von 3 bis 30 bar eingeblasen wird. Die im Rührkessel hergestellte Teilmischung und die im statischen Mischer hergestellten Teilmischung werden kontinuierlich einem Doppelschneckenextruder zugeführt und bei Temperaturen von 0 bis 80 °C, bevorzugt zunächst 0 bis 20 °C, später 50 bis 70°C, und einem Druck von 2 bis 20 bar, bevorzugt 5 bis 15 bar, miteinander vermischt. Diese Mischung wird aus dem Doppelschneckenextruder ausgetragen und direkt einem statischen oder dynamischen Mischer, vorzugsweise einem statischen Mischer, zugeführt, in dem unter Bildung der Mischung M1) gleichzeitig die Gesamtmenge des Härters eindosiert wird. Die Mischung aller Komponenten unter Bildung der Mischung M1) erfolgt in diesem statischen oder dynamischen Mischer bei Temperaturen von in der Regel 40 bis 90°C, bevorzugt 50 bis 80°C, besonders bevorzugt 60 bis 70°C, und einem Druck von 2 bis 30 bar, bevorzugt 3 bis 20 bar. Das Treibmittel liegt in der Mischung M1) feinteilig dispergiert vor, bevorzugt als fein verteilte Tropfen mit einem mittleren Teilchendurchmesser (D₅₀, zahlengemittelt) im Bereich von 1 bis 10 µm, bevorzugt 4 bis 6 µm.
Die im Verfahrensschritt a) der erfindungsgemäßen Verfahren hergestellte Mischung M1) wird dann in einer bevorzugten Ausführungsform mittels einer oder mehrerer Düsen, bevorzugt mit einem Mengenstrom von 200 bis 1200 kg/h, besonders bevorzugt von 350 bis 900 kg/h, kontinuierlich einem bevorzugt horizontal angeordneten Schäumkanal zugeführt, in dem die Verfahrensschritte b), c,) d) und e) kontinuierlich ausgeführt werden. Die Mischung M1) steht unmittelbar vor der Eindüsung unter einem Druck von 2 bis 30 bar, bevorzugt 3 bis 20 bar, und weist eine Temperatur auf, die über dem Siedepunkt des Treibmittels bei Normaldruck, in der Regel bei 40 bis 90°C, bevorzugt 50 bis 80°C, besonders bevorzugt 60 bis 70°C, liegt, so dass beim Eindüsen der Mischung M1) in den Schäumkanal, der bevorzugt Normaldruck oder -um den Austritt von Gasen aus dem Schäumtunnel möglichst zu verhindern- einen geringen Unterdruck, der bevorzugt 1 bis 10 mbar unter dem Normaldruck liegt, aufweist, ein Drucksprung erfolgt, durch den -unterstützt durch die im folgenden noch beschriebene Mikrowellenbeheizung- das Treibmittel und die ggf. zugesetzten nicht-reaktiven Gase verdampfen und die Mischung M 1) aufschäumt.

Der Schäumkanal wird gebildet von einer Rückwand, durch die mittels einer oder mehrerer Düsen die Mischung M1) dem Schäumkanal zugeführt wird, und vier an die Rückwand anschließenden Seitenwänden, welche senkrecht zueinander angeordnet sind, so daß sie einen geschlossenen rechtwinkligen Querschnitt bilden, und der Schäumkanal an der der Rückwand gegenüberliegenden Seite offen ist. Bevorzugt wird die Mischung M1) über nur eine Düse dem Schäumkanal zugeführt. Die Düse ist bevorzugt im unteren Drittel der Rückwand und mittig zwischen den beiden seitlichen Seitenwänden des Schäumkanals angeordnet. Die Düse kann beispielsweise kreisförmig, elliptisch oder rechtwinklig, bevorzugt eine Schlitzdüse sein. Der Verfahrensschritt b), das Erwärmen und Aufschäumen der Mischung M1) mittels der im folgenden noch beschriebenen Mikrowellenstrahlung, erfolgt direkt nach dem Eindüsen der Mischung M1) in den Schäumkanal. Der sich im Verfahrensschritt a) im Schäumkanal bildende Schaumstrang wird dann durch den Schäumkanal transportiert, in dem die weiteren Verfahrensschritte b), c,) d) und e) kontinuierlich ausgeführt werden. Die vier Seitenwände des Schäumkanals können prinzipiell statisch, d.h. unbeweglich, sein, wodurch aber ein Transport des Schaumstoffstrangs durch den Schäumkanal lediglich durch den Vortrieb der kontinuierlich zugeführten und aufschäumenden Mischung M1) bewirkt werden kann, was in der Regel immer wieder zu Verstopfungen des Schäumkanals führt. In einer bevorzugten Ausführung der erfindungsgemäßen Verfahren sind die vier Seitenwände des Schäumkanals daher als Bänder ausgeführt, welche sich mit einer vorzugsweise konstanten und vorzugsweise für alle vier Bänder gleichen Geschwindigkeit im Bereich von 0,2 bis 2 m/min, insbesondere von 0,6 bis 1,6 m/min, von der Dosierstelle der Mischung M1) in Richtung der offenen Seite des Schäumkanals bewegen. Besonders bevorzugt sind die Bänder umlaufend, d.h. jedes einzelne eine Seitenwand bildende Band ist umlaufend ausgeführt. Die Seitenwände des Schäumkanals, bevorzugt die Bänder, sollten aufgrund der in den Verfahrensschritten b), c) und d) eingesetzten Mikrowellenstrahlung eine möglichst hohe Transparenz für diese Mikrowellenstrahlung und eine möglichst hohe Beständigkeit gegenüber dieser Mikrowellenstrahlung aufweisen. Bevorzugt bestehen die Seitenwände, insbesondere die Bänder, des Schäumkanals, aus einem Polyolefin oder einem Polyester. Die beweglichen Bänder können zur Verbesserung der Stabilität durch außenliegende Stützwände, beispielsweise Stützbleche, und/oder geeignete Führungsvorrichtungen, beispielsweise Schienen, gestützt und/oder geführt werden. Die Verbindungsstellen, an denen die Seitenwände aneinander oder an die Rückwand grenzen, können mit dem Fachmann bekannten Vorrichtungen und Verfahren, beispielsweise elastischen oder verschiebbaren Dichtungen, insbesondere Silikondichtungen, oder Stopfschnüren gegen Gaszu- oder -austritt abgedichtet werden, ein ungewolltes Austreten von Mikrowellenstrahlung kann beispielsweise durch mit Metallgewebe ummantelte elastische Silikonschläuche oder - schnüre bewirkt werden. Jede einzelne Seitenwand des Schäumkanals, insbesondere auch in ihrer Ausführungsform als Band, kann über die gesamte Länge des Schäumkanals, also von der Rückwand des Schäumkanals bis zum gegenüberliegenden offenen Ende des Schäumkanals, einstückig ausgeführt sein, beispielsweise als ein über die gesamte Länge des Schäumkanals umlaufendes Band; jede einzelne Seitenwand kann aber auch aus zwei oder mehr aneinandergereihten Segmenten bestehen, beispielsweise aus zwei oder mehr hintereinander angeordneten umlaufenden Bändern; die nicht-einstückige Ausführung einer Seitenwand hat den Vorteil, daß zwischen zwei Segmenten dieser Seitenwand besonders einfach Vorrichtungen angebracht werden können, beispielsweise Öffnungen oder Türen, über die ein Zugang zum Schäumkanal ermöglicht wird, beispielsweise um im Fall von Störungen den Schaumstrang ganz oder teilweise dem Schäumkanal zu entnehmen, oder um im laufenden Betrieb Proben des Schaumstrangs zu entnehmen. Die Rückwand des Schäumkanals kann grundsätzlich aus jedem mikrowellenbeständigem Material bestehen, bevorzugt besteht auch die Rückwand aus einem Polyolefin oder einem Polyester. Die Rückwand kann bezüglich ihrer Form in weiten Bereichen variiert werden und beispielsweise als ebene senkrecht stehende Fläche ausgebildet sein, sie kann aber auch eine sich konvex in den Schäumkanal hineinwölbende Fläche sein. In einer besonders bevorzugten Ausführungsform sind die dem Schaum zugewandten Seiten der Seitenwände und/oder der Rückwand zur Verringerung oder Vermeidung von Schaumanhaftungen mit einer Antihaftschicht, insbesondere mit einer Polyorganosiloxan- oder Polytetrafluorethanbeschichtung, oder mit im laufenden Betrieb abziehbaren oder austauschbaren Elementen, insbesondere Papier oder Kunststofffolien (sogenannten Opferfolien), versehen, wobei diese Vorrichtungen zur Verringerung oder Vermeidung von Anhaftungen als solche dem Fachmann bekannt sind, beispielsweise aus der PU-Schaumherstellung. Der Schäumkanal, der die äußere Form, insbesondere die Breite und Höhe, des Schaumstoffstrangs ausbildet, weist bevorzugt einen rechteckigen Querschnitt auf, und hat bevorzugt eine Breite im Bereich von 1,0 m bis 2,0 m und eine Höhe im Bereich von 0,3 m bis 0,7 m. Die Länge des Schäumkanals liegt üblicherweise im Bereich von 30 m bis 70 m, bevorzugt im Bereich von 40 m bis 60 m. Grundsätzlich gibt es für die Breite und Höhe des Schäumkanals keine Beschränkungen, in der Praxis sind aber die genannten Abmessungen bevorzugt, da aus wirtschaftlichen Gesichtspunkten die Herstellung möglichst großvolumiger Schaumstoffstränge wünschenswert wäre, der in den Verfahrensschritten b), c) d) und e) durchgeführte Schäum- , Trocknungs- und Tempervorgang aber in Bezug auf die Materialhomogenität limitiert ist. Die Länge des Schäumkanals unterliegt grundsätzlich ebenfalls keinen Beschränkungen, sie sollte aus wirtschaftlichen Erwägungen möglichst gering sein, allerdings erfordert die Durchführung der Verfahrensschritte a) bis e) bestimmte Verweilzeiten des Schaumstoffstrangs im Schäumkanal, aufgrund derer die genannten Längen des Schäumkanals bevorzugt sind.
An der Außenwand mindestens einer Seitenwand, bevorzugt den Außenwänden mehrerer Seitenwände, besonders bevorzugt den Außenwänden der Oberseite und der Unterseite, des Schäumkanals sind pro Seitenwand zwei oder mehr Vorrichtungen, insbesondere Magnetrone, zur Einstrahlung der bei den Verfahrensschritten b) c) und d) verwendeten Mikrowellenstrahlung angeordnet. Die einzelnen Vorrichtungen zur Einstrahlung der Mikrowellenstrahlung weisen bevorzugt jeweils einen Abstand zueinander auf, der der Wellenlänge der eingestrahlten Mikrowellenstrahlung entspricht. Bei einer besonders bevorzugte Anordnung der Vorrichtungen zur Einstrahlung von Mikrowellen befinden sich an jeder Außenseite der oberen Seitenwand und der unteren Seitenwand des Schäumkanals zwei Reihen von 2 bis 30, insbesondere 10 bis 20, Einstrahlungsvorrichtungen, wobei die einzelnen Einstrahlungsvorrichtungen zueinander einen Abstand aufweisen, der der Wellenlänge der eingestrahlten Mikrowellenstrahlung entspricht. Bevorzugt sind diese Reihen um 20 bis 80 cm zueinander versetzt angeordnet, um eine gegenseitige Beeinflußung der eingestrahlten Strahlung gering zu halten. Der Abstand zwischen der Rückwand des Schäumkanals mit der darin angeordneten mindestens einen Düse, durch die die Einspeisung der Mischung M1) in den Schäumkanal erfolgt, und der ersten Vorrichtung zur Einstrahlung von Mikrowellenstrahlung sollte im Bereich von 10 cm bis 200 cm, insbesondere im Bereich von 100 bis 150 cm liegen, um einen möglichst frühzeitigen Energieeintrag durch Mikrowellenstrahlung in die aus der Düse austretende und aufschäumende Mischung M1) zu gewährleisten und gleichzeitig eine homogen Verteilung zu gewährleisten. Die Vorrichtungen zur Einstrahlung von Mikrowellenstrahlung sind vorzugsweise über die gesamte Länge des Schäumkanals angebracht, die zur Durchführung der Verfahrensschritte b) c) und d) vorgesehen ist. Besonders bevorzugt erfolgt das Erwärmen und Aufschäumen der Mischung M1) gemäß Verfahrensschritt b) im wesentlichen in einem Bereich von 0 bis 30 % der Gesamtlänge des Schäumkanals, Vernetzung und Härten des gebildeten Schaums gemäß Verfahrensschritt c) erfolgen im wesentlichen in einem nachfolgenden Bereich von 10 bis 50 % der Gesamtlänge des Schäumkanals, die Trocknung des Schaumstoffs gemäß Verfahrensschritt d) erfolgt im wesentlichen in einem nachfolgenden Bereich von 30 bis 70 % der Gesamtlänge des Schäumkanals, und das Tempern des getrockneten Schaumstoffs gemäß Verfahrensschritt e) erfolgt im wesentlichen in einem abschließenden Bereich von 40 bis 100 % der Gesamtlänge des Schäumkanals, wobei die genannten Prozentwerte sich auf die Gesamtlänge des Schäumkanals beziehen und 0 % für die Rückwand des Schäumkanals stehen und 100% für das der Rückwand gegenüberliegende offene Ende des Schäumkanals stehen; dabei spiegeln die vorstehenden Formulierungen "im wesentlichen" die Tatsache wider, daß wie eingangs bereits erläutert, die einzelnen Verfahrensschritte b) bis e) in der Praxis nicht scharf voneinander abgegrenzt sind sondern zu einem gewissen Maß kontinuierlich ineinander übergehen bzw. zeitlich parallel ablaufen. Vorzugsweise läßt sich die Einstrahlungsintensität jeder einzelnen Vorrichtung zur Einstrahlung von Mikrowellenstrahlung unabhängig regeln. Bei den erfindungsgemäßen Verfahren kann grundsätzlich mit Mikrowellen im Frequenzbereich von 0,2 GHz bis 100 GHz gearbeitet werden. Für die industrielle Praxis stehen Frequenzen von 0,915, 2,45 und
5,8 GHz zur Verfügung, wobei 2,45 GHz besonders bevorzugt sind. Zweckmäßigerweise wird die Mikrowelleneinstrahlung so durchgeführt, dass die Energieaufnahme des Schaums über die gesamte Länge des Schäumkanals, in denen die Verfahrensschritte b), c) und d) ablaufen, zwischen 5 und 2000 Wh, vorzugsweise zwischen 500 und 1500 Wh, bezogen auf 1 kg Wasser in der Mischung M1) liegt.
Im Verfahrensschritt e) erfolgt das Tempern des getrockneten Schaumstoffs durch Heißluft mit einer Temperatur im Bereich von 150°C bis 290°C, bevorzugt 160°C bis 280°C, besonders bevorzugt 170 bis 270°C, und mit einem bevorzugten Mengenstrom im Bereich von 500 bis 5000 Nm³/ m² durchströmter Schaumfläche / h(mit Normbedingungen gemäß DIN 1343). Der Schäumkanal ist dazu in dem zur Durchführung des Verfahrensschritts e) vorgesehenen Bereich auf mindestens einer Seite mit mindestens einer Zuluftvorrichtung versehen, durch die die Heißluft in den Schäumkanal eingeblasen wird, und auf mindestens einer anderen Seite mit mindestens einer Abluftvorrichtungen versehen, durch die die Heißluft aus dem Schäumkanal abgeführt wird. In einer bevorzugten Ausführungsform ist der Schäumkanal auf einer Seite, bevorzugt der Oberseite, mit einer oder mehreren Zuluftvorrichtungen und auf der gegenüberliegenden Seite, bevorzugt der Unterseite, mit einer oder mehreren Abluftvorrichtungen versehen, so daß der Heißluftstrom den offenzelligen Schaumstoff vollständig durchspülen kann. Besonders bevorzugt wird der heiße Luftstrom durch Umwälzventilatoren umgewälzt und so mehrfach durch den Schaumstrang geblasen.

In den Verfahrensschritten b) bis e) laufen als wesentliche chemische bzw. physikalische Vorgänge die folgenden ab, wobei nochmals darauf hingewiesen wird, daß die einzelnen Verfahrensschritte in der Praxis nicht scharf voneinander abgegrenzt sind sondern zu einem gewissen Maß kontinuierlich ineinander übergehen bzw. zeitgleich ablaufen: Im Verfahrensschritt b) erfolgt nach der Eindüsung der Mischung M1) in den Schäumkanal und dem dabei eintretenden Drucksprung aufgrund der in der Mischung M1) enthaltenen Wärmeenergie und der eingestrahlten Mikrowellenenergie eine Verdampfung des Treibmittels und ein Ausgasen der ggf. zugesetzten nichtreaktiven Gase, insbesondere Luft und/oder Stickstoff, was zu einem Aufschäumen der Mischung M1) führt, wobei ein im wesentlichen noch unvernetzter, geschlossenzelliger Melamin/Formaldehyd-Schaum gebildet wird. Dieser Aufschäumvorgang sollte unter möglichst gleichmäßiger Volumenzunahme, d.h. möglichst ohne beispielsweise periodisches Aufblähen und Zusammensacken der Schaumfront, erfolgen, was sich durch entsprechende Regelung des zugeführten Massenstroms der Mischung M1), der eingestrahlten Mikrowellenenergie und der Geschwindigkeit der bevorzugten beweglichen Seitenwände des Schäumkanals im Rahmen der jeweils beschriebenen Parameter sicherstellen läßt. Im Verfahrensschritt c) erfolgt ausgelöst durch den Härter unter Einstrahlung von Mikrowellenenergie im wesentlichen eine Vernetzung und Härtung des gebildeten Schaums, indem im Melamin/Formaldehyd-Vorkondensat enthaltene Aminogruppen und N-Methylolgruppen unter Wasserfreisetzung miteinander reagieren; bereits in diesem Verfahrensschritt c), hauptsächlich aber im folgenden Verfahrensschritt d), erfolgt auch ein Öffnen bzw. Zerplatzen der Zellwände des Schaums unter Bildung einer offenzelligen Schaumstruktur aus Melamin-Formaldehyd-Stegen und den entsprechenden Zwischenräumen. Im Verfahrensschritt d) erfolgt unter Einstrahlung von Mikrowellenenergie im wesentlichen eine Trocknung des gebildeten Schaumstoffs, d.h. die Hauptmengen der im Schaumstoff enthaltenen flüchtigen Bestandteile wie Treibmittel, Wasser, Formaldehyd und Härter werden ausgetrieben. Im Verfahrensschritt e) erfolgt durch Heißluftzufuhr die Abspaltung von Formaldehyd aus noch im Schaumstoff chemisch gebundenen N-Methylolgruppen. Während der Verfahrensschritte d) und e) unterliegt der Schaumstoffstrang aufgrund des Austrags der genannten Stoffe einem ca. 10%-igem Volumenschwund bezogen auf das gegen Ende des Verfahrensschritts c) vorliegende Maximalvolumen des Schaumstoffs, dem in einer besonders bevorzugten Ausführungsform der vorliegenden Erfindung durch eine entsprechende Verringerung der vorstehend beschriebenen Breite und Höhe des Schäumkanals Rechnung getragen werden kann.

Das Erwärmen und Aufschäumen der Mischung M1) gemäß Verfahrensschritt b) erfolgt in der Regel in einem Temperaturbereich von 40°C bis 100°C, bevorzugt 50°C bis 90°C, besonders bevorzugt 60 bis 90°C.
Die Vernetzung und das Härten des gebildeten Schaums gemäß Verfahrensschritt c) erfolgt in der Regel in einem Temperaturbereich von 50°C bis 110°C, bevorzugt 60°C bis 100°C, besonders bevorzugt 70 bis 100°C.
Die Trocknung des Schaumstoffs gemäß Verfahrensschritt d) erfolgt in der Regel in einem Temperaturbereich von 100°C bis 200°C, bevorzugt 110°C bis 180°C, besonders bevorzugt 110 bis 150°C.
Das Tempern des getrockneten Schaumstoffs gemäß Verfahrensschritt e) erfolgt in der Regel in einem Temperaturbereich von 150°C bis 290°C, bevorzugt 160°C bis 280°C, besonders bevorzugt 170 bis 270°C.
Das Erwärmen und Aufschäumen der Mischung M1) gemäß Verfahrensschritt b) erfolgt in der Regel über einen Zeitraum von 0,1 min bis 4 min, bevorzugt von 0,1 min bis 3,5 min, besonders bevorzugt von 0,1 min bis 3 min.

Die Vernetzung und das Härten des gebildeten Schaums gemäß Verfahrensschritt c) erfolgt in der Regel über einen Zeitraum von 2 min bis 40 min, bevorzugt von 5 min bis 30 min, besonders bevorzugt von 10 bis 20 min.
Die Trocknung des Schaumstoffs gemäß Verfahrensschritt d) erfolgt in der Regel über einen Zeitraum von 2 min bis 40 min, bevorzugt von 5 min bis 30 min, besonders bevorzugt von 10 min bis 20 min.
Das Tempern des getrockneten Schaumstoffs gemäß Verfahrensschritt e) erfolgt in der Regel über einen Zeitraum von 15 min bis 150 min, bevorzugt von 20 bis 80, besonders bevorzugt von 30 bis 50.

In einer bevorzugten Ausführungsform der vorliegenden Erfindung wird dem Schäumkanal über ein oder mehrere Zufuhrstellen Luft und/oder Stickstoff, insbesondere Luft undStickstoff, zugeführt und über ein oder mehrere Abfuhrstellen werden Abgase abgeführt. Ganz besonders bevorzugt wird dem Schäumkanal in den Bereichen, in denen die Verfahrensschritte b), c) und e) ablaufen, über mehrere Zufuhrstellen Luft zugeführt und über mehrere Abfuhrstellen Abgase abgeführt. Im Verfahrensschritt d) wird über mehrere Zufuhrstellen Stickstoff zugeführt und über mehrere Abfuhrstellen Abgase abgeführt. Bevorzugt ist die dem Schäumkanal zugeführte Luft und/oder Stickstoff, insbesondere Luft und Stickstoff, vorgeheizt, besonders bevorzugt auf die vorstehend genannten Temperaturen, bei denen die Verfahrensschritte b), c) und d) jeweils durchgeführt werden und im Verfahrensschritt e) durch zusätzliche Beheizung und Umwälzung der heißen Luft durch den Schaumstrang unterstützt.. Der Zweck dieser Zufuhr und Umwälzung von Luft und/oder Stickstoff, insbesondere Luft und Stickstoff, ist die verbesserte Abfuhr flüchtiger Verbindungen, insbesondere aber eine erhöhte Sicherheit der erfindungsgemäßen Verfahren, da die Zufuhr von Luft und/oder Stickstoff, insbesondere Luft und Stickstoff, zu einer geringeren Konzentration brennbarer bzw. entzündlicher Stoffe, im Fall der Stickstoffzufuhr auch zu einer Inertisierung der Gasphase innerhalb des Schäumkanals führt. Ebenfalls aus Sicherheitsgründen wird in einer weiteren bevorzugten Ausführungsform der Erfindung der Treibmittelgehalt der aus dem Schäumkanal abgeführten Abgase durch Meßvorrichtungen bestimmt. Geeignete Meßvorrichtungen, bevorzugt solche, die auf Infrarotspektroskopie, insbesondere inline- bzw. online-IR-Spektroskopie basieren, sind dem Fachmann an sich bekannt und in der Literatur beschrieben. Der so bestimmte Treibmittelgehalt dient über dem Fachmann an sich bekannte und in der Literatur beschriebene Regelvorrichtungen als Steuergröße für den Luft- und/oder Stickstoffzufuhrstrom, und zwar besonders bevorzugt dergestalt, daß der Luft- und/oder Stickstoffzufuhrstrom in den Schäumkanal immer mindestens so groß ist, daß die untere Explosionsgrenze des Treibmittels oder die Sauerstoffgrenzkonzentration im Abgasstrom und im Schäumkanal unterschritten wird. Die aus dem Schäumkanal abgeführten Abgase werden bevorzugt über eine dem Fachmann an sich bekannte und in der Literatur beschrieben Verbrennungsvorrichtung, insbesondere eine Brennkammer, entsorgt.

Der nach Verfahrensschritt e) erhaltene getemperte Schaumstoffstrang wird üblicherweise durch geeignete Schneidvorrichtungen, beispielsweise Messer, Sägen oder Heißdrähte, bevorzugt senkrecht zur Richtung des Schäumkanals durchtrennt, so daß Schaumstoffquader mit einer durch die Abmessungen des Schäumkanals vorgegebenen Breite und Höhe erhalten werden. Bevorzugt weisen die Schaumstoffquader nach dem Durchtrennen des Schaumstoffstrangs folgende Abmessungen auf: eine Breite im Bereich von 1,0 m bis 1,5 m, eine Höhe im Bereich von 0,3 m bis 0,7 und eine Länge im Bereich von 1,5 m bis 2,5 m.

Vor oder ggf. nach der vorstehend beschriebenen Durchtrennung des getemperten Schaumstoffstrangs mittels Schneidvorrichtungen, jedenfalls aber nach Durchführung des Verfahrensschritts e) kann in den erfindungsgemäßen Verfahren ein Verfahrensschritt f) durchgeführt werden, in dem der getemperte Schaumstoff ein- oder mehrmals auf die Hälfte oder weniger seiner Ausgangshöhe, bevorzugt auf 5% bis 50%, besonders bevorzugt auf 10% bis 20% seiner Ausgangshöhe, komprimiert und wieder auf seine Ausgangshöhe entspannt wird. Durch diesen Kompressionsvorgang bricht ein Teil der das offenzellige Schaumstoffgerüst bildenden Stege, wodurch die Elastizität des Schaumstoffs erhöht wird. Dieser Kompressionsvorgang zur Elastifizierung von Melamin/Formaldehyd-Schaumstoffen ist dem Fachmann grundsätzlich bekannt und in der Literatur, beispielsweise in EP-A 1 505 105 und EP-B 37470, beschrieben.

Die nach den erfindungsgemäßen Verfahren herstellbaren Melamin/Formaldehyd-Schaumstoffe haben Dichten zwischen 4 und 50 g/l, bevorzugt zwischen 4 und 20 g/l, und die Zugfestigkeitswerte für Dichten zwischen 8 und 11 g/l liegen oberhalb 100 kPa, gemessen gemäß DIN EN ISO 1798. Die nach den erfindungsgemäßen Verfahren erhältlichen Melamin/Formaldehyd-Schaumstoffe haben eine offenzellige Struktur, mit einer Offenzelligkeit, gemessen nach DIN ISO 4590, von mehr als 80 %, insbesondere mehr als 90 %. Der mittlere Porendurchmesser liegt bevorzugt im Bereich von 10 bis 1000 µm, insbesondere im Bereich von 50 bis 500 µm (D₅₀-Wert, zahlengemittelt, bestimmt mittels Licht-oder Elektronenmikroskopie in Verbindung mit Bildauswertung).

Aus den nach den erfindungsgemäßen Verfahren herstellbaren Melamin/Formaldehyd-Schaumstoffen in Strang- oder Quaderform können alle erwünschten Platten-, Bahnen- bzw. Folienstärken herausgeschnitten werden. Es können auch mit dem Fachmann bekannten Schneid- und Fräsverfahren die unterschiedlichst geformten Formkörper hergestellt werden. Die Melamin/Formaldehyd-Schaumstoffe können auch ein- oder beidseitig mit Deckschichten versehen oder kaschiert werden, z.B. mit Papier, Pappe, Glasvlies, Holz, Gipsplatten, Metallblechen oder -folien, Kunststoff-Folien, die gegebenenfalls auch geschäumt sein können.

Das Hauptanwendungsgebiet der erfindungsgemäß hergestellten Melamin/Formaldehyd-Schaumstoffe ist die akustische Dämpfung und/oder thermische Isolierung im Luft- Schiffs- und Kraftfahrzeugbau, im Maschinenbau oder im Bauwesen, insbesondere die Wärmedämmung und Schalldämpfung von Gebäuden und Gebäudeteilen, insbesondere von Zwischenwänden; weiterhin die Wärmedämmung und Schalldämpfung der Motor- und Innenräume von Fahrzeugen und Flugzeugen sowie die Tieftemperaturisolierung, z.B. von Kühlhäusern, Öltanks und Behältern von Flüssiggas einschließlich Flüssiggastanker (LNG carrier). Aufgrund ihrer hohen Offenzelligkeit eignen sich diese Schaumstoffe zur Aufnahme und Speicherung von Flüssigkeiten aller Art. In beweglichen Tanks (Flugzeuge, Schiffe, KfZ) können sie das unerwünschte Hin-und-her-Schwappen größerer Flüssigkeitsmengen erheblich verringern. Weitere Anwendungsgebiete sind die Verwendung als isolierende Wandverkleidung sowie als isolierendes und stoßdämmendes Verpackungsmaterial. Aufgrund der hohen Härte des Melaminharzes können diese Schaumstoffe auch als hochwirksames Reinigungsmittel, beispielsweise für leicht abrasiv wirkende Reinigungs-, Schleif- und Polierschwämme eingesetzt werden. Die offenzellige Struktur der Schaumstoffe erlaubt zusätzlich die Aufnahme und Speicherung geeigneter Reinigungs-, Schleif- und Poliermittel im Innern der Schaumstoffe. Auch können die Schaumstoffe für spezielle Aufgaben hydrophob und oleophob ausgerüstet werden, z.B. durch Imprägnierung mit Silikon- und Fluorcarbonemulsionen. Wegen der extrem niedrigen FormaldehydEmissionen lassen sich die erfindungsgemäßen Schaumstoffe auch im Hygienesektor z.B. in Form von dünnen Vliesen als Wundverband oder als Bestandteil von Babywindeln, Femcare und Inkontinenzprodukten einsetzen.

Die nach den erfindungsgemäßen Verfahren herstellbaren Melamin/Formaldehyd-Schaumstoffe zeichnen sich gegenüber den bisher bekannten Melamin/Formaldehyd-Schaumstoffen insbesondere dadurch aus, daß sie eine verbesserte Kombination aus mechanisch/elastischen Eigenschaften und Strömungswiderständen, d.h. akustischen Eigenschaften, aufweisen.

Die Erfindung wird anhand der nachfolgenden Beispiele näher erläutert.

### Beispiele:

Stoffe oder Beispiele mit vorangestelltem "V-" sind nicht erfindungsgemäß und dienen zum Vergleich.

### Meßmethoden:

### Stempeldruckwert [N]:

Alle Stempeldruckwertmessungen zur Beurteilung der mechanisch/elastischen Eigenschaften der Melamin/Formaldehyd-Schaumstoffe wurden wie folgt durchgeführt: Ein zylindrischer Stahlstempel mit einem Durchmesser von 8 mm und einer Höhe von 10 cm wurde im rechten Winkel in eine zylindrische Schaumstoffprobe mit dem Durchmesser von 11 cm und einer Höhe von 5 cm gedrückt, bis die Schaumstoffprobe riß. Die bis zum Reißen der Schaumstoffprobe durch den Stempel ausgeübte maximale Kraft (Einheit: N), im folgenden auch Stempeldruckwert genannt, gibt Auskunft über die mechanisch/elastische Güte des Schaumstoffs (angegeben werden in Tabelle 1 jeweils zwei durch "/" getrennte Werte, von denen der erste einer Messung parallel zur Steigrichtung des Schaums, der zweite einer Messung senkrecht zur Steigrichtung des Schaums entspricht). Je größer die Stempeldruckwerte sind, umso besser sind die mechanisch/elastischen Eigenschaften der Melamin/Formaldehyd-Schaumstoffe; je weiter die an einem Melamin/Formaldehyd-Schaumstoff parallel und senkrecht zur Steigrichtung des Schaums gemessenen Werte voneinander abweichen, umso größer ist die Anisotropie und umso schlechter ist die Homogenität des Schaumstoffs.

### Längenbezogener Strömungswiderstand r [Pa•s/m²]:

Der längenbezogene Strömungswiderstand r wurde bestimmt gemäß DIN EN ISO 29053 aus 1993 (Verfahren A). Je größer der längenbezogene Strömungswiderstand eines Melamin/Formaldehyd-Schaumstoffs ist, umso besser ist das Schallabsorptionsvermögen des Schaumstoffs.

### Masseverlust [%] / Schrumpf [%]:

Der Masseverlust und Schrumpf von Melamin/Formaldehyd-Schaumstoffen, der ein Maß für die thermooxidative Beständigkeit darstellt, wurde durch 48-stündige Lagerung bei 260°C bestimmt (angegeben werden in Tabelle 1 jeweils zwei durch "/" getrennte Werte, von denen der erste dem Masseverlust, der zweite dem Schrumpf entspricht, jeweils in % der Ausgangsmasse bzw. des Ausgangsvolumens).

### Einsatzstoffe:

### Melamin/Formaldehyd-Vorkondensate:

mf-1: Als Melamin/Formaldehyd-Vorkondensat mf-1 wurde ein sprühgetrocknetes Melamin/Formaldehyd-Vorkondensat mit einem mittleren Molekulargewicht (Zahlenmittel) Mₙ von 370 g/mol eingesetzt, welches ein Molverhältnis von Melamin : Formaldehyd von 1 : 3 aufwies, welches außer Melamin keine anderen Duroplastbildner und außer Formaldehyd keine weiteren Aldehyde enthielt und welches einen Sulfitgruppengehalt von 2,3 Gew.-%, bezogen auf das Gesamtgewicht des Melamin/Formaldehyd-Vorkondensats, aufwies.
mf-2: Als Melamin/Formaldehyd-Vorkondensat mf-2 wurde ein sprühgetrocknetes Melamin/Formaldehyd-Vorkondensat mit einem mittleren Molekulargewicht (Zahlenmittel) Mₙ von 350 g/mol eingesetzt, welches ein Molverhältnis von Melamin : Formaldehyd von 1 : 3 aufwies, welches außer Melamin keine anderen Duroplastbildner und außer Formaldehyd keine weiteren Aldehyde enthielt und welches sulfitgruppenfrei war.

### Tenside:

at-1: Als anionisches Tensid at-1 wurde Hostapur^{®} SAS 60 der Fa. Clariant (CAS-Nr. 85711-69-9), ein kommerziell verfügbares Alkansulfonatgemisch der Formel (I), eingesetzt: 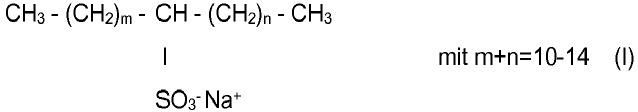
nt-1: Als nichtionisches Tensid nt-1 wurde Lutensol^{®} AT 80 Pulver der BASF SE eingesetzt, ein kommerziell verfügbares Alkylpolyethylenglykolethergemisch, welches erhältlich ist durch Umsetzung eines linearen gesättigten C₁₆/C₁₈-Fettalkoholgemischs mit einem 80-fachen molaren Überschuß von Ethylenoxid.

Härter:
h-1: Als Härter h-1 wurde konzentrierte Ameisensäure eingesetzt.

Salze einer anorganischen Säure und/oder einer organischen Carbonsäure:
z-1: Als Salz einer organischen Carbonsäure z-1 wurde Natriumformiat eingesetzt.
z-2: Als Salz einer organischen Carbonsäure z-2 wurde Natriumcitrat eingesetzt.

### Treibmittel:

t-1: Als Treibmittel t-1 wurde eine Mischung aus 80 Gew.-% n-Pentan und 20 Gew.-% iso-Pentan eingesetzt.

### Weitere Additive:

wa-1:Als weiteres Additiv wa-1 wurde basisches Kupfercarbonat zur Wärme- und UV-Stabilisierung eingesetzt.

### Beispiele und Vergleichsbeispiele 1 - 15:

Es wurden jeweils die in Tabelle 1 genannten Gewichtsteile der ebenfalls in Tabelle 1 genannten Einsatzstoffe im Labormaßstab wie folgt zu Melamin/Formaldehyd-Schaumstoffen umgesetzt: in einem ersten Verfahrensschritt a) wurden die Gesamtmenge des Melamin/Formaldehyd-Vorkondensats, des Wassers, der Tenside, der Salze einer anorganischen Säure und/oder einer organischen Carbonsäure, des Treibmittels und der weiteren Additive mittels eines mit 10000 U/min betriebenen Ultra-Turrax^{®} Rührstabs bei einer Temperatur von 20 bis 35°C über einen Zeitraum von 1 min und unter Einmischung von Luft miteinander vermischt, anschließend wurde die Gesamtmenge des Härters zugegeben und der Mischvorgang für weitere 30 s fortgesetzt. Die so erhaltene Mischung wurde in eine Schäumform aus Polypropylen (Maße: 20 cm x 20 cm x 20 cm) gegeben und in einem Mikrowellenofen über einen Zeitraum von 5 min mit Mikrowellenenergie mit einer Frequenz von 2,45 GHz bestrahlt. Innerhalb dieser 5 min schäumte die Mischung auf, der Schaum härtete durch Vernetzung zunehmend aus und trocknete aufgrund des Austreibens flüchtiger Bestandteile (Verfahrensschritte b), c) und d)); während der Mikrowelleneinstrahlung stieg die Temperatur der Mischung bzw. des gebildeten Schaums von anfangs 40°C auf 100°C. Zur Durchführung des Verfahrensschritts e) wurden die nach der Mikrowellenbestrahlung erhaltenen Schaumstoffkörper in einem Umluftofen über einen Zeitraum von 20 min bei 240°C getempert (Verfahrensschritt e)).
Die Eigenschaften der jeweils erhaltenen Melamin/Formaldehyd-Schaumstoffe werden in Tabelle 1 widergegeben. Eine verbesserte Kombination aus mechanisch/elastischen Eigenschaften und Strömungswiderständen, d.h. akustischen Eigenschaften, ist in der Regel dann gegeben, wenn ein Melamin/Formaldehyd-Schaumstoff sowohl einen Stempeldruckwert von ≥ 20 N als auch einen längenbezogenen Strömungswiderstand r von ≥ 4500 Pa•s/m² aufweist. Ganz besonders verbesserte Kombinationen sind Stempeldruckwerte > 30 N, längenbezogene Strömungswiderstände > 7000 Pa*s/m² und Dichten < 10 g/l.

**Tabelle 1: Art und Menge der Einsatzstoffe zur Herstellung von Melamin/Formaldehyd-Schaumstoffen sowie Eigenschaften dieser Schaumstoffe**

| Beispiel | 1 | 2 | V-3 | V-4 | V-5 | V-6 | 7 | 8 |
|---|---|---|---|---|---|---|---|---|
| | | | | | | | | |
| Zusammensetzung [Gew.-teile] | | | | | | | | |
| mf-1 | 100 | - | 100 | 100 | 100 | 100 | 100 | 100 |
| mf-2 | - | 100 | - | - | - | - | - | - |
| at-1 * | 1,24 | 1,24 | 1,24 | 1,24 | 1,54 | - | 1,24 | 1,24 |
| nt-1 * | 0,30 | 0,30 | 0,30 | 0,30 | - | 1,54 | 0,30 | 0,30 |
| z-1 | 0,75 | 2,75 | 0,75 | 0,75 | 0,75 | 0,75 | 1,38 | - |
| z-2 | 0,63 | - | 0,63 | 0,63 | 0,63 | 0,63 | - | 1,38 |
| h-1 | 3,0 | 3,0 | 3,0 | 3,0 | 3,0 | 3,0 | 3,0 | 3,0 |
| t-1 | 18 | 18 | 18 | 18 | 18 | 18 | 18 | 18 |
| wa-1 | 0,06 | - | 0,06 | 0,06 | 0,06 | 0,06 | 0,06 | 0,06 |
| Wasser | 38,75 | 38,75 | 21,95 | 61,29 | 38,75 | 38,75 | 38,75 | 38,75 |
| | | | | | | | | |
| Eigenschaften | | | | | | | | |
| Stempeldruckwert [N] | 32/34 | 35/32 | 3/5 | 2/4 | 7/11 | 2/3 | 35/32 | 24 / 28 |
| Längenbezogener Strömungswiderstand r [Pa• s/m²] | 8400 | 9200 | 4400 | 7900 | 3800 | 172000 | 6800 | 4600 |
| Dichte [g/l] | 11 | 10 | 12 | 13 | 12 | 14 | 10 | 11 |
| Masseverlust [%] / Schrumpf [%] | 28/20 | n.b. | n.b. | n.b. | n.b. | n.b. | n.b. | n.b. |

| Beispiel | | V-9 | V-10 | V-11 | 12 | 13 | 14 | 15 |
|---|---|---|---|---|---|---|---|---|
| | | | | | | | | |
| Zusammensetzung [Gew.-teile] | | | | | | | | |
| mf-1 | | 100 | 100 | 100 | 100 | 100 | 100 | 100 |
| mf-2 | | - | - | - | - | - | - | - |
| at-1 * | | 1,24 | 1,24 | 1,24 | 1,24 | 1,24 | 1,24 | 1,24 |
| nt-1 * | | 0,30 | 0,30 | 0,30 | 0,30 | 0,30 | 0,30 | 0,30 |
| z-1 | | - | 0,75 | 0,75 | 0,75 | 0,75 | 0,75 | 0,75 |
| z-2 | | - | 0,63 | 0,63 | 0,63 | 0,63 | 0,63 | 0,63 |
| h-1 | | 3,0 | 1,5 | 4,5 | 3,0 | 3,0 | 3,0 | 3,0 |
| t-1 | | 18 | 18 | 18 | 9 | 27 | 18 | 18 |
| wa-1 | | 0,06 | 0,06 | 0,06 | 0,06 | 0,06 | - | 0,03 |
| Wasser | | 38,75 | 38,75 | 38,75 | 38,75 | 38,75 | 38,75 | 38,75 |
| | | | | | | | | |
| Eigenschaften | | | | | | | | |
| Stempeldruckwert [N] | | 15/18 | 13/11 | 3/4 | 23/21 | 22/26 | 30/28 | 29/33 |
| Längenbezogener Strömungswiderstand r [Pa•s/m²] | | 24800 | 2800 | 13900 | 7900 | 4500 | 6900 | 7400 |
| Dichte [g/l] | | 10 | 9 | 14 | 17 | 8 | 10 | 11 |
| Masseverlust [%] / Schrumpf [%] | | n.b. | n.b. | n.b. | n.b. | n.b. | 47/63 | 35/30 |

| | | | | | | | | |
|---|---|---|---|---|---|---|---|---|
| (vorangestelltes V: zum Vergleich; n.b.: nicht bestimmt; * Tenside gerechnet als Feststoff) | | | | | | | | |

### Beispiel 16:

Es wurden die in Beispiel 1 der Tabelle 1 genannten Gewichtsteile der ebenfalls dort genannten Einsatzstoffe im Produktionsmaßstab wie folgt zu Melamin/Formaldehyd-Schaumstoffen umgesetzt:
In einem Rührkessel mit einem von unten angebrachten Rührfinger wurde in einem kontinuierlichen Prozeß die Gesamtmenge des Melamin/Formaldehyd-Vorkondensats und die Gesamtmenge des Wassers und die Gesamtmenge der Salze einer anorganischen Säure und/oder einer organischen Carbonsäure und 10% der insgesamt vorgesehenen Gesamtmenge der Tensidmischung, welche separat aus dem anionischen und dem nichtionischen Tensid hergestellt wurde, und die Gesamtmenge der weiteren Additive bei Normaldruck und einer Temperatur von 30°C vermischt. Zeitgleich zur Herstellung dieser Teilmischung im Rührkessel erfolgte auf verfahrenstechnisch separatem Weg die Herstellung einer zweiten Teilmischung, indem jeweils über Dosierpumpen die Gesamtmenge des Treibmittels und 90% der insgesamt vorgesehenen Gesamtmenge der Tensidmischung in einem mit Füllkörpern gefüllten Rohr bei einem Druck von 10 bar und einer Temperatur von 5°C miteinander vermischt wurden, wobei in diese zweite Teilmischung kontinuierlich Stickstoff mit einem Druck von 15 bar eingeblasen wurde. Die im Rührkessel hergestellte Teilmischung und die im mit Füllkörpern gefüllten Rohr hergestellte Teilmischung wurden kontinuierlich einem Doppelschneckenextruder zugeführt und bei Temperaturen von zunächst 15°C dann ansteigend auf 60°C und einem Druck von 8 bar, miteinander vermischt. Diese Mischung wurde aus dem Doppelschneckenextruder ausgetragen und direkt einem statischen Mischer zugeführt, in den unter Bildung der Mischung M1) gleichzeitig die Gesamtmenge des Härters eindosiert wurde. Die Mischung aller Komponenten unter Bildung der Mischung M1) erfolgte in diesem statischen Mischer bei Temperaturen von 65°C und einem Druck von 8 bar. Diese im Verfahrensschritt a) hergestellte Mischung M1) wurde dann mittels einer Düse mit einem Mengenstrom von 560 kg/h kontinuierlich einem horizontal angeordneten Schäumkanal zugeführt, der einen gegenüber dem Umgebungsdruck einen Unterdruck von 2 mbar aufwies, in dem die Verfahrensschritte b), c,) d) und e) kontinuierlich ausgeführt wurden. Die Mischung M1) stand unmittelbar vor der Eindüsung unter einem Druck von 8 bar und wies eine Temperatur von 65°C auf. Der Schäumkanal wurde gebildet von einer Rückwand, durch die mittels der Düse die Mischung M1) dem Schäumkanal zugeführt wurde, und vier an die Rückwand anschließenden Seitenwänden, welche senkrecht zueinander angeordnet waren, so daß sie einen geschlossenen rechtwinkligen Querschnitt bildeten, und wobei der Schäumkanal an der der Rückwand gegenüberliegenden Seite offen war. Die Düse war im unteren Drittel der Rückwand und mittig zwischen den beiden seitlichen Seitenwänden des Schäumkanals angeordnet und war als Schlitzdüse ausgeführt. Der Verfahrensschritt b), das Erwärmen und Aufschäumen der Mischung M1) mittels Mikrowellenstrahlung, erfolgte direkt nach dem Eindüsen der Mischung M1) in den Schäumkanal. Der sich im Verfahrensschritt a) im Schäumkanal bildende Schaumstrang wurde dann durch den Schäumkanal transportiert, in dem die weiteren Verfahrensschritte b), c,) d) und e) kontinuierlich ausgeführt wurden. Die vier Seitenwände des Schäumkanals waren jeweils als umlaufende Bänder ausgeführt, welche sich mit einer konstanten und für alle vier Bänder gleichen Geschwindigkeit von 0,83 m/min von der Dosierstelle der Mischung M1) in Richtung der offenen Seite des Schäumkanals bewegten. Die umlaufenden Bänder waren Polyesterbänder, die auf den dem Schaum zugewandten Seiten mit einer Polyorganosiloxanbeschichtung als Antihaftschicht versehen waren. Die umlaufenden Bänder waren durch außenliegende Stützbleche gestützt und wurden durch Schienen geführt. Die Rückwand des Schäumkanals bestand aus Polypropylen. Der Schäumkanal wies einen rechteckigen Querschnitt auf und hatte eine Gesamtlänge von 46 m sowie eine Breite von 1,4 m und eine Höhe von 0,6 m. An jeder Außenseite der oberen umlaufenden Bänder und der unteren umlaufenden Bänder des Schäumkanals waren jeweils zwei zueinander versetzte Reihen mit jeweils 14 Mikrowelleneinstrahlungsvorrichtungen angebracht, wobei die einzelnen Einstrahlungsvorrichtungen zueinander einen Abstand aufwiesen, der der Wellenlänge der eingestrahlten Mikrowellenstrahlung entsprach. Der Abstand zwischen der Rückwand des Schäumkanals mit der darin angeordneten Düse, durch die die Einspeisung der Mischung M1) in den Schäumkanal erfolgte, und der ersten Vorrichtung zur Einstrahlung von Mikrowellenstrahlung betrug 100 cm. Das Erwärmen und Aufschäumen der Mischung M1) gemäß Verfahrensschritt b) erfolgte im wesentlichen in einem Bereich von 0 bis 15 % der Gesamtlänge des Schäumkanals, Vernetzung und Härten des gebildeten Schaums gemäß Verfahrensschritt c) erfolgten im wesentlichen in einem nachfolgenden Bereich von 15 bis 35% der Gesamtlänge des Schäumkanals, die Trocknung des Schaumstoffs gemäß Verfahrensschritt d) erfolgte im wesentlichen in einem nachfolgenden Bereich von 35 bis 50 % der Gesamtlänge des Schäumkanals mit 135 Mikrowellen die auf einer Länge von 6 m gleichmäßig verteilt über die gesamte Breite einstrahlten, und das Tempern des getrockneten Schaumstoffs gemäß Verfahrensschritt e) erfolgte im wesentlichen in einem abschließenden Bereich von 50 bis 100 % der Gesamtlänge des Schäumkanals, wobei die genannten Prozentwerte sich auf die Gesamtlänge des Schäumkanals beziehen und 0 % für die Rückwand des Schäumkanals steht und 100% für das der Rückwand gegenüberliegende offene Ende des Schäumkanals stehen; dabei spiegeln die vorstehenden Formulierungen "im wesentlichen" die Tatsache wider, daß wie eingangs bereits erläutert, die einzelnen Verfahrensschritte b) bis e) in der Praxis nicht scharf voneinander abgegrenzt waren sondern zu einem gewissen Maß kontinuierlich ineinander übergingen bzw. zeitlich parallel abliefen. Die Einstrahlungsintensität jeder einzelnen Vorrichtung zur Einstrahlung von Mikrowellenstrahlung ließ sich unabhängig regeln. Die Mikrowellenstrahlung hatte eine Frequenz von 2,45 GHz. Die Energieaufnahme des Schaums über die gesamte Länge des Schäumkanals, in denen die Verfahrensschritte b), c) und d) ablaufen, lag bei ca. 1000 Wh, bezogen auf 1 kg Wasser in der Mischung M1). Die Mikrowellenstrahlung war gepulst mit der jeweiligen Maximalleistung der eingesetzten Magnetrone, der Leistungseintrag wurde durch die Anzahl und Dauer der Pulse geregelt. Im Verfahrensschritt e) erfolgte das Tempern des getrockneten Schaumstoffs durch Heißluft mit einer Temperatur von 180 bis 240 °C und mit einem Mengenstrom von 4000 Nm³/m² durchströmter Schaumfläche / h (mit Normbedingungen gemäß DIN 1343). Der Schäumkanal war dazu in dem zur Durchführung des Verfahrensschritts e) vorgesehenen Bereich mit mehreren Umluftventilatoren und elektrischen Beheizungen versehen, die heiße Luft von oben nach unten durch den Schaumstrang bliesen sowie mit mehreren Abluftvorrichtungen versehen, durch die die Heißluft aus dem Schäumkanal abgeführt wurde. Die Zuluft wurde an mehreren Stellen zugeführt und teilweise vorgeheizt. Das Erwärmen und Aufschäumen der Mischung M1) gemäß Verfahrensschritt b) erfolgte bei einer Temperatur von ca. 70°C. Die Vernetzung und das Härten des gebildeten Schaums gemäß Verfahrensschritt c) erfolgte bei einer Temperatur von ca. 90°C. Die Trocknung des Schaumstoffs gemäß Verfahrensschritt d) erfolgte bei einer Temperatur von ca. 120°. Das Tempern des getrockneten Schaumstoffs gemäß Verfahrensschritt e) erfolgte bei einer Temperatur von ca. 240°. Das Erwärmen und Aufschäumen der Mischung M1) gemäß Verfahrensschritt b) erfolgte über einen Zeitraum von 2,5 min. Die Vernetzung und das Härten des gebildeten Schaums gemäß Verfahrensschritt c) erfolgte über einen Zeitraum von 20 min. Die Trocknung des Schaumstoffs gemäß Verfahrensschritt d) erfolgte über einen Zeitraum von 10 min. Das Tempern des getrockneten Schaumstoffs gemäß Verfahrensschritt e) erfolgte über einen Zeitraum von 24 min. Dem Schäumkanal wurde in den Bereichen, in denen der Verfahrensschritt c) ablief, über mehrere Zufuhrstellen an der Unterseite des Schäumkanals vorgeheizter Stickstoff zugeführt, und über mehrere Abfuhrstellen an der Oberseite des Schäumkanals Abgase abgeführt. Durch Stickstoffzufuhr wurde die Sauerstoffgrenzkonzentration im Abschnitt d) ständig unterschritten. Der Sauerstoffgehalt wurde dabei mit einem NIR-Laserspektrometer ständig überwacht. In den Verfahrensschritten b), c) und e) wurde über mehrere Zufuhrstellen an der Oberseite des Schäumkanals zum Teil vorgeheizte Luft zugeführt und über mehrere Abfuhrstellen Abgase abgeführt. Der Treibmittelgehalt wurde dabei durch online-IR Spektroskopie kontinuierlich bestimmt und durch Luftzufuhr immer unterhalb der unterer Explosionsgrenze des Treibmittels gehalten. Die aus dem Schäumkanal abgeführten Abgase wurden über eine Fackel entsorgt. Der nach Verfahrensschritt e) erhaltene getemperte und kontinuierlich aus dem Schäumkanal austretende Schaumstoffstrang wurde nach einer Stranglänge von jeweils 2 m senkrecht zur Richtung des Schäumkanals mittels einer Sägevorrichtung durchtrennt, so daß Schaumstoffquader mit einer durch die Abmessungen des Schäumkanals vorgegebenen Breite und Höhe erhalten wurden. Diese Schaumstoffquader wurden in einer Stempelpresse jeweils einmal auf 15% ihrer Ausgangshöhe komprimiert und wieder bis zur Ausgangshöhe entspannt.

An dem derart im Produktionsmaßstab hergestellten Melamin/Formaldehyd-Schaumstoff wurden ebenfalls der Stempeldruckwert, der längenbezogene Strömungswiderstand r, die Dichte, der Masseverlust und der Schrumpf bestimmt. Die Meßwerte waren im Rahmen der Fehlergrenzen jeweils identisch mit denen, die für den im Labormaßstab erhaltenen Melamin/Formaldehyd-Schaumstoff gemäß Tabelle 1, Beispiel 1, erhalten wurden.

Die Beispiele belegen, daß sich die nach den erfindungsgemäßen Verfahren herstellbaren Melamin/Formaldehyd-Schaumstoffe gegenüber bekannten Melamin/Formaldehyd-Schaumstoffen dadurch auszeichnen, daß sie eine verbesserte Kombination aus insbesondere mechanisch/elastischen Eigenschaften und Strömungswiderständen, d.h. akustischen Eigenschaften, aufweisen.

## Patentansprüche

1. Verfahren zur Herstellung von Melamin/Formaldehyd-Schaumstoffen, umfassend die Verfahrensschritte:
a) Herstellen einer wäßrigen Mischung M1) umfassend
100 Gewichtsteile mindestens eines Melamin/Formaldehyd-Vorkondensats,
2 bis 4 Gewichtsteile mindestens eines Härters,
0,2 bis 5 Gewichtsteile einer Tensidmischung,
0,1 bis 5 Gewichtsteile mindestens eines Salzes einer anorganischen Säure und/oder einer organischen Carbonsäure,
1 bis 40 Gewichtsteile mindestens eines Treibmittels,
0 bis 5 Gewichtsteile mindestens eines Farbstoffs und/oder eines optischen Aufhellers,
0 bis 20 Gewichtsteile eines oder mehrerer weiterer Additive, und
25 bis 60 Gewichtsteile Wasser,
b) Erwärmen und Aufschäumen der Mischung M1) mittels Mikrowellenstrahlung,
c) Vernetzung und Härten des gebildeten Schaums mit Hilfe des Härters und Mikrowellenstrahlung,
d) Trocknung des Schaumstoffs mittels Mikrowellenstrahlung und
e) Tempern des getrockneten Schaumstoffs mittels Heißluft,
**dadurch gekennzeichnet, dass** die Mischung M1) als Tensidmischung ein Gemisch aus 50 bis 90 Gew.-% eines anionischen Tensids und 10 bis 50 Gew.-% eines nichtionischen Tensids enthält, wobei die Gewichtsprozente jeweils bezogen sind auf das Gesamtgewicht der Tensidmischung.

2. Verfahren nach Anspruch 1, **dadurch gekennzeichnet, dass** die Mischung M1) als Tensidmischung ein Gemisch aus 50 bis 90 Gew.-% eines anionischen Tensids der Formel (I) 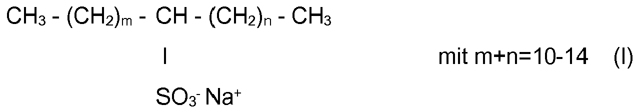 und 10 bis 50 Gew.-% nichtionischer Tenside, welche erhältlich sind durch Umsetzung eines linearen gesättigten C₁₂- bis C₁₈-Fettalkohols mit einem 30- bis 120-fachen molaren Überschuß von Ethylenoxid, enthält, wobei die Gewichtsprozente jeweils bezogen sind auf das Gesamtgewicht der Tensidmischung.

3. Verfahren nach Anspruch 1, **dadurch gekennzeichnet, dass** die Mischung M1) als Tensidmischung ein Gemisch aus 50 bis 90 Gew.-% eines anionischen Tensids der Formel (II)
CH₃-(CH₂)ⱼ-O-(CH₂-CH₂-O)ₖ-SO₃Na mit j = 11 bis 16, k = 3 bis 10 (II)
und 10 bis 50 Gew.-% nichtionischer Tenside, welche erhältlich sind durch Umsetzung eines linearen gesättigten C₁₂- bis C₁₈-Fettalkohols mit einem 30- bis 120-fachen molaren Überschuß von Ethylenoxid, enthält, wobei die Gewichtsprozente jeweils bezogen sind auf das Gesamtgewicht der Tensidmischung.

4. Verfahren nach Ansprüchen 1 bis 3, **dadurch gekennzeichnet, dass** im Verfahrensschritt a) ein Melamin/Formaldehyd-Vorkondensat eingesetzt wird, welches ein Molverhältnis von Melamin:Formaldehyd im Bereich von 1:1,5 bis 1:4 und ein mittleres Molekulargewicht (Zahlenmittel) Mₙ im Bereich von 200 g/mol bis 1000 g/mol aufweist.

5. Verfahren nach Ansprüchen 1 bis 4, **dadurch gekennzeichnet, dass** im Verfahrensschritt a) als Härter Ameisensäure eingesetzt wird.

6. Verfahren nach Ansprüchen 1 bis 5, **dadurch gekennzeichnet, dass** im Verfahrensschritt a) als Treibmittel eine Mischung aus 30 bis 90 Gew.% n-Pentan und 70 bis 10 Gew.-% iso-Pentan eingesetzt wird, wobei die Gew.-% jeweils bezogen sind auf das Gesamtgewicht des Treibmittels.

7. Verfahren nach Ansprüchen 1 bis 6, **dadurch gekennzeichnet, dass** im Verfahrensschritt a) die Mischung M1) als Salze einer anorganischen Säure und/oder einer organischen Carbonsäure ein oder mehrere Verbindungen ausgewählt aus Natrium- und Kaliumformiaten, -acetaten, -citraten, -chloriden, -bromiden, -sulfaten, -sulfiten, -nitraten und - dihydrogenphosphaten umfaßt.

8. Verfahren nach Ansprüchen 1 bis 7, **dadurch gekennzeichnet, dass** im Verfahrensschritt a) ein Melamin/Formaldehyd-Vorkondensat eingesetzt wird, welches einen Sulfitgruppengehalt, gerechnet als -SO₃ und bezogen auf das Gesamtgewicht des Melamin/Formaldehyd-Vorkondensats, im Bereich von 0,1 bis 3 Gew.-% aufweist, und dass die Mischung M1) als weiteres Additiv 0,01 bis 5 Gewichtsteile eines UV- und/oder Wärmestabilistors umfaßt.

9. Verfahren nach Ansprüchen 1 bis 8, **dadurch gekennzeichnet, dass** in die Mischung M1) vor Ausführung des Verfahrensschritts b) Luft und/oder Stickstoff eingemischt wird.

10. Verfahren nach Ansprüchen 1 bis 9, **dadurch gekennzeichnet, dass** die Herstellung der Mischung M1) gemäß Verfahrensschritt a) dergestalt erfolgt, daß aus Wasser, Melamin/Formaldehyd-Vorkondensat und Salzen einer anorganischen Säure und/oder einer organischen Carbonsäure in einem Rührkessel eine erste Teilmischung hergestellt wird, aus der Tensidmischung und dem Treibmittel in einem statischen oder dynamischen Mischer eine zweite Teilmischung hergestellt wird, die beiden Teilmischungen und, falls vorhanden, Farbstoff und weitere Additive anschließend in einem Extruder oder einem anderen dynamischen Mischer miteinander gemischt werden, und abschließend in einem weiteren statischen oder dynamischen Mischer der Härter zugegeben wird.

11. Verfahren nach Anspruch 10, **dadurch gekennzeichnet, dass** bei der Herstellung der zweiten Teilmischung in dem statischen oder dynamischen Mischer und/oder bei der Vermischung der beiden Teilmischungen in dem Extruder oder anderen dynamischen Mischer Luft und/oder Stickstoff eingemischt wird.

12. Verfahren nach Ansprüchen 1 bis 11, **dadurch gekennzeichnet, dass** die Mischung M1) kontinuierlich einem horizontal angeordneten Schäumkanal zugeführt wird, in dem die Verfahrensschritte b), c,) d) und e) kontinuierlich ausgeführt werden.

13. Verfahren nach Anspruch 12, **dadurch gekennzeichnet, dass** der Schäumkanal gebildet wird von einer Rückwand, durch die mittels einer Düse die Mischung M1) dem Schäumkanal zugeführt wird, und vier an die Rückwand anschließenden Seitenwänden, welche senkrecht zueinander angeordnet sind, so daß sie einen geschlossenen rechtwinkligen Querschnitt bilden, und der Schäumkanal an der der Rückwand gegenüberliegenden Seite offen ist.

14. Verfahren nach Ansprüchen 11 bis 13, **dadurch gekennzeichnet, dass** die vier Seitenwände des Schäumkanals Bänder sind, welche sich mit einer konstanten und für alle vier Bänder gleichen Geschwindigkeit im Bereich von 0,2 m/min bis 2 m/min von der Dosierstelle der Mischung M1) in Richtung der offenen Seite des Schäumkanals bewegen.

15. Verfahren nach Ansprüchen 12 bis 14, **dadurch gekennzeichnet, dass** die Seitenwände und die Rückwand des Schäumkanals aus einem Polyolefin oder einem Polyester bestehen und die dem Schaum zugewandten Seiten der Seitenwände und/oder der Rückwand eine Polyorganosiloxan- oder Polytetrafluorethanbeschichtung aufweisen.

16. Verfahren nach Ansprüchen 12 bis 15, **dadurch gekennzeichnet, daß** die die Seitenwände und/oder die Rückwand des Schäumkanals auf der dem Schaum zugewandten Seite mit einer während des Schäumvorgangs austauschbaren Kunststofffolie versehen ist.

17. Verfahren nach Ansprüchen 12 bis 16, **dadurch gekennzeichnet, daß** der Schäumkanal mit rechteckigem Querschnitt eine Breite im Bereich von 1,0 m bis 2 m und eine Höhe im Bereich von 0,3 m bis 0,7 m aufweist

18. Verfahren nach Ansprüchen 12 bis 17, **dadurch gekennzeichnet, daß** an den Außenseiten der Seitenwände des Schäumkanals zwei oder mehr Vorrichtungen zur Einstrahlung der bei den Verfahrensschritten b) c) und d) verwendeten Mikrowellenstrahlung angeordnet sind, die jeweils einen Abstand zueinander aufweisen, der der Wellenlänge der eingestrahlten Mikrowellenstrahlung entspricht.

19. Verfahren nach Ansprüchen 1 bis 18, **dadurch gekennzeichnet, dass** im Verfahrensschritt e) das Tempern durch Heißluft mit einem Mengenstrom im Bereich von 500 bis 5000 Nm³ / m² durchströmter Schaumfläche / h (mit Normbedingungen gemäß DIN 1343) erfolgt.

20. Verfahren nach Ansprüchen 1 bis 19, **dadurch gekennzeichnet, dass** das Erwärmen und Aufschäumen der Mischung M1) gemäß Verfahrensschritt b) in einem Temperaturbereich von 40°C bis 100°C erfolgt.

21. Verfahren nach Ansprüchen 1 bis 20, **dadurch gekennzeichnet, dass** Vernetzung und Härten des gebildeten Schaums gemäß Verfahrensschritt c) in einem Temperaturbereich von 50°C bis 110°C erfolgt.

22. Verfahren nach Ansprüchen 1 bis 21, **dadurch gekennzeichnet, dass** die Trocknung des Schaumstoffs gemäß Verfahrensschritt d) in einem Temperaturbereich von 100°C bis 200°C erfolgt.

23. Verfahren nach Ansprüchen 1 bis 22, **dadurch gekennzeichnet, dass** das Tempern des getrockneten Schaumstoffs gemäß Verfahrensschritt e) in einem Temperaturbereich von 150°C bis 290°C erfolgt.

24. Verfahren nach Ansprüchen 1 bis 23, **dadurch gekennzeichnet, dass** das Erwärmen und Aufschäumen der Mischung M1) gemäß Verfahrensschritt b) über einen Zeitraum von 0,1 min bis 4 min erfolgt.

25. Verfahren nach Ansprüchen 1 bis 24, **dadurch gekennzeichnet, dass** Vernetzung und Härten des gebildeten Schaums gemäß Verfahrensschritt c) über einen Zeitraum von 2 min bis 40 min erfolgt.

26. Verfahren nach Ansprüchen 1 bis 25, **dadurch gekennzeichnet, dass** die Trocknung des Schaumstoffs gemäß Verfahrensschritt d) über einen Zeitraum von 2 min bis 40 min erfolgt.

27. Verfahren nach Ansprüchen 1 bis 26, **dadurch gekennzeichnet, dass** das Tempern des getrockneten Schaumstoffs gemäß Verfahrensschritt e) über einen Zeitraum von 15 min bis 150 min erfolgt.

28. Verfahren nach Ansprüchen 12 bis 27, **dadurch gekennzeichnet, dass** dem Schäumkanal über ein oder mehrere Zufuhrstellen Luft und/oder Stickstoff zugeführt wird und über ein oder mehrere Abfuhrstellen Abgase abgeführt werden.

29. Verfahren nach Anspruch 28, **dadurch gekennzeichnet, dass** der Treibmittelgehalt der Abgase durch Meßvorrichtungen bestimmt wird und über Regelvorrichtungen dergestalt als Steuergröße für den Luft- und/oder Stickstoffzufuhrstrom dient, daß die untere Explosionsgrenze des Treibmittels oder die Sauerstoffgrenzkonzentration im Schäumkanal unterschritten wird.

30. Verfahren nach Ansprüchen 1 bis 29, **dadurch gekennzeichnet, dass** der nach Verfahrensschritt e) erhaltene getemperte Schaumstoffstrang durch geeignete Schneidvorrichtungen senkrecht zur Richtung des Schäumkanals durchtrennt wird, so daß Schaumstoffquader mit einer durch die Abmessungen des Schäumkanals vorgegebenen Breite und Höhe erhalten werden.

31. Verfahren nach Ansprüchen 1 bis 30, **dadurch gekennzeichnet, dass** nach Verfahrensschritt e) ein Verfahrensschritt f) durchgeführt wird, in dem der getemperte Schaumstoff ein- oder mehrmals auf die Hälfte oder weniger seiner Ausgangshöhe komprimiert und wieder auf seine Ausgangshöhe entspannt wird.

32. Melamin/Formaldehyd-Schaumstoffe, erhältlich nach Verfahren gemäß Ansprüchen 1 bis 31.

33. Verwendung der Melamin/Formaldehyd-Schaumstoffe nach Anspruch 32 zur akustischen Dämpfung und/oder thermischen Isolierung im Luft-, Schiffs- und Kraftfahrzeugbau, im Maschinenbau oder im Bauwesen sowie als Reinigungsschwamm zur Reinigung von Oberflächen aller Art.
